(19) Europäisches Patentamt
European Patent Office
Office européen des brevets

(11) **EP 1 119 479 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(21) Anmeldenummer: **00952873.8**

(22) Anmeldetag: **27.06.2000**

(51) Int Cl.:
**B60T 8/172** *(2006.01)*

(86) Internationale Anmeldenummer:
**PCT/DE2000/002077**

(87) Internationale Veröffentlichungsnummer:
**WO 2001/010689 (15.02.2001 Gazette 2001/07)**

(54) **VERFAHREN UND VORRICHTUNG ZUR ERMITTLUNG EINER GESCHWINDIGKEITSGRÖSSE**

METHOD AND DEVICE FOR DETERMINING SPEED VALUE

PROCEDE ET DISPOSITIF POUR LA DETERMINATION D'UNE GRANDEUR DE VITESSE

(84) Benannte Vertragsstaaten:
**DE FR GB NL**

(30) Priorität: **06.08.1999 DE 19936710**

(43) Veröffentlichungstag der Anmeldung:
**01.08.2001 Patentblatt 2001/31**

(73) Patentinhaber: **ROBERT BOSCH GMBH**
**70442 Stuttgart (DE)**

(72) Erfinder: **GUTMANN, Ralf**
**D-74249 Jagsthausen (DE)**

(56) Entgegenhaltungen:
DE-A- 4 314 830     DE-A- 4 428 347
DE-A- 19 502 384     DE-A- 19 735 562
DE-A1- 19 713 251     US-A- 5 719 770

• **PATENT ABSTRACTS OF JAPAN vol. 1995, no. 11, 26. Dezember 1995 (1995-12-26) & JP 07 218520 A (TOSHIBA CORP), 18. August 1995 (1995-08-18)**

**Beschreibung**

Stand der Technik

Die Erfindung betrifft ein Verfahren und eine Vorrichtung zur Ermittlung einer Geschwindigkeitsgröße, die die Geschwindigkeit eines Fahrzeuges repräsentiert. Entsprechende Verfahren und Vorrichtungen sind aus dem Stand der Technik in vielerlei Modifikationen bekannt.

Aus der DE 197 13 251 A1 ist ein Verfahren zur Ermittlung einer die Geschwindigkeit eines Fahrzeuges beschreibenden Größe bekannt. Bei diesem Verfahren werden für wenigstens zwei Räder die Geschwindigkeiten ermittelt. In Abhängigkeit der Geschwindigkeit eines einzigen ausgewählten Rades wird die die Geschwindigkeit des Fahrzeuges beschreibende Größe ermittelt. Die Auswahl des zur Ermittlung der die Geschwindigkeit des Fahrzeuges beschreibenden Größe benötigten Rades erfolgt wenigstens in Abhängigkeit eines Betriebszustandes des Fahrzeuges, der wenigstens durch die Geschwindigkeiten von wenigstens zwei Rädern und einer in Abhängigkeit wenigstens dieser Geschwindigkeiten ermittelten Größe, die eine die Beschleunigung des Fahrzeuges beschreibende Größe darstellt, beschrieben wird. Dieses Verfahren hat den Nachteil, daß zur Stützung der Referenzgeschwindigkeit lediglich ein einziges Rad des Fahrzeuges herangezogen wird. Dadurch kann es bei einem Wechsel des ausgewählten Rades zu einem Übergang in der Referenzgeschwindigkeit kommen, den die tatsächlich vorliegende Fahrzeuggeschwindigkeit nicht aufweist.

Aus der DE 44 28 347 C2 ist eine Schaltungsanordnung zur Ermittlung der Geschwindigkeit eines Kraftfahrzeuges bekannt. Die Schaltungsanordnung weist ein Fuzzy-System auf, dem als Eingangsgrößen relative Differenzwerte der Radgeschwindigkeiten gegenüber der zu einem vorherigen Abtastzeitpunkt ermittelten Geschwindigkeit eingegeben werden. Mit Hilfe des Fuzzy-Systems werden Gewichtsfaktoren für die einzelnen Radgeschwindigkeiten berechnet. Die Geschwindigkeit des Fahrzeuges wird als gewichteter Mittelwert der vier Radgeschwindigkeiten berechnet. D.h. die Geschwindigkeit des Fahrzeuges entspricht direkt dem gewichteten Mittelwert, eine Stützung wird nicht vorgenommen.

Ausgehend von dem bekannten Stand der Technik besteht die Aufgabe der Erfindung darin, ein Verfahren und eine Vorrichtung zur Ermittlung einer Geschwindigkeitsgröße, die die Geschwindigkeit eines Fahrzeuges repräsentiert, zu schaffen, mit dem eine präzisere Ermittlung dieser Geschwindigkeitsgröße ermöglicht wird.

Diese Aufgabe wird durch die Merkmale der unabhängigen Ansprüche gelöst.

Vorteile der Erfindung

Das erfindungsgemäße Verfahren betrifft ein Verfahren zur Ermittlung einer Geschwindigkeitsgröße, die die Geschwindigkeit eines Fahrzeuges repräsentiert. Hierzu werden Radgeschwindigkeitsgrößen ermittelt, die jeweils die Geschwindigkeit eines Rades beschreiben. Ferner werden Gewichtungsgrößen für die einzelnen Radgeschwindigkeitsgrößen ermittelt werden. In Abhängigkeit der mit den Gewichtungsgrößen gewichteten Radgeschwindigkeitsgrößen wird durch Mittelwertbildung eine Stützgröße ermittelt. Die Geschwindigkeitsgröße wird in Abhängigkeit der Stützgröße ermittelt.

Durch die Mittelwertbildung, mit der eine Stützgröße ermittelt wird, und durch die Ermittlung der Geschwindigkeitsgröße in Abhängigkeit der Stützgröße, wird eine Verbesserung der Ermittlung der Geschwindigkeitsgröße erreicht. Aufgrund der Mittelwertbildung geht nicht nur die Geschwindigkeit eines Rades ein, sondern es gehen die Geschwindigkeiten mehrerer Räder ein, wobei je nach Eignung des Rades für die Ermittlung der Geschwindigkeitsgröße, die Geschwindigkeit des Rades gewichtet wird. Dadurch daß die Geschwindigkeitsgröße in Abhängigkeit der Stützgröße ermittelt wird, diese Vorgehensweise wird als Stützung der Geschwindigkeitsgröße bezeichnet, kann nochmals eine Bewertung vorgenommen werden.

Mit dem erfindungsgemäßen Verfahren bzw. mit der erfindungsgemäßen Vorrichtung sind folgende weitere vorteilhafte Verbesserungen verbunden:

- Verbesserung der Fahrzeug-Referenzgeschwindigkeitsbildung (Referenzbildung) in FDR-Systemen, wie sie beispielsweise in der in der Automobiltechnischen Zeitschrift (ATZ) 96, 1994, Heft 11, auf den Seiten 674 bis 689 erschienen Veröffentlichung "FDR - Die Fahrdynamikregelung von Bosch" beschrieben sind.
- Verbesserung der Referenzbildung aufgrund einer vollständigen Funktionalität in allen Fahrsituationen bei extremen Allrad-Fahrzeugen mit bis zu 50%/50% Antriebsverteilung und begrenzten Momentenkopplungen in den Differential-Getrieben.
- Verbesserung der Robustheit des Algorithmus für die Referenzbildung gegenüber fehlerbehafteten Eingangssignalen, wie sie beispielsweise bei toleranzbehafteten Pulsrädern an Drehzahlfühlern auftreten können.
- Verbesserung der Übertragbarkeit der Referenzbildung. Das erfindungsgemäße Verfahren kann auf beliebige Antriebskonzepte (Heckantrieb, Frontantrieb, Allrad mit Mitteldifferential, Allrad mit Torsen-Differential, Allrad mit Visco-Sperre, etc.) ohne jegliche Veränderungen übertragen werden. Die Information, ob ein Rad angetrieben wird oder nicht, wird nicht benötigt. Das System ist auch in Off-Road-Fahrzeugen zur Aufrechterhaltung einer ABS- und ASR-Funktion im Gelände geeignet.

Ferner besteht ein weiterer Vorteil darin, daß die Referenzbildung auch bei Ausfall von Lenkwinkel-, Querbeschleunigungs-, Giergeschwindigkeits- und Motormomentensignal anwendbar ist und somit in Rückfallebenen von FDR-Systemen einsetzbar ist. Es reicht aus, wenn als Eingangsgrößen die Radgeschwindigkeiten und der vom Fahrer eingestellte Vordruck verbleiben. Die ausgefallenen Eingangsgrößen können über Modellbildung aus den Radgeschwindigkeiten ermittelt werden. Dieser Vorteil ergibt sich daraus, daß der Algorithmus für die Referenzbildung hauptsächlich von den Radgeschwindigkeiten bzw. deren Ableitungen und weniger von den Signalen Fbij und MMot abhängt. Somit ist auch ein Einsatz in Systemen möglich, in denen lediglich die Radgeschwindigkeiten und die Radbremskräfte in Bremssituationen sowie eine grobe Abschätzung der Giergeschwindigkeit vorhanden sind, wie es beispielsweise in Rückfallebenen von FDR-Systemen der Fall ist.

Die auf einer Fuzzy-Logik basierende Radstabilitätsbetrachtung wird anstelle einer scharfen Logik, wie sie beispielsweise in der DE 197 13 251 A1 beschrieben ist, eingesetzt. Ferner wird die Korrektur der geschätzten Fahrzeuggeschwindigkeit mit einer stützenden Radgeschwindigkeit um eine kontinuierliche Beeinflussung der Stärke der Korrektur erweitert.

Mit Hilfe eines Fuzzy-Ansatzes wird eine stützende Radgeschwindigkeit aus allen vier Radgeschwindigkeiten gebildet. Zusätzlich wird die Wahrscheinlichkeit für die Eignung der stützenden Radgeschwindigkeit bestimmt, mit der dann z.B. die Koeffizienten für einen Kalman-Bucy-Filter berechnet werden.

Die Betrachtung nur der einen Hälfte der Fuzzyfizierung (keine Betrachtung des Komplements) mit der Skalierung auf eine Wahrscheinlichkeit vereinfacht die Berechnungen wesentlich und macht eine Defuzzyfizierung und eine Verknüpfung von Fuzzy-Sets in vektorieller Form überflüssig. Dadurch kann Rechenkapazität und Speicherkapazität eingespart werden.

Weitere Vorteile sowie vorteilhafte Ausgestaltungen können den Unteransprüchen, wobei auch eine beliebige Kombination der Unteransprüche denkbar ist, der Zeichnung sowie der Beschreibung des Ausführungsbeispiels entnommen werden. Der Wortlaut der Unteransprüche soll Teil der Beschreibung sein.

Zeichnung

Die Zeichnung besteht aus den Figuren 1 bis 6. In den Figuren 1 und 2 ist mit Hilfe von Blockschaltbildern die erfindungsgemäße Vorrichtung dargestellt. In den Figuren 3 und 4 ist das in der erfindungsgemäßen Vorrichtung ablaufende erfindungsgemäße Verfahren dargestellt. In der Figur 5, die aus den Teilfiguren 5a bis 5h besteht, sind verschiedene Zugehörigkeitsfunktionen der Fuzzyregelung dargestellt, die dem erfindungsgemäßen Verfahren zugrundeliegt. In Figur 6 ist eine Funktion dargestellt, die im Rahmen der Fuzzyregelung zur Filterung von Größen verwendet wird.

Ausführungsbeispiel

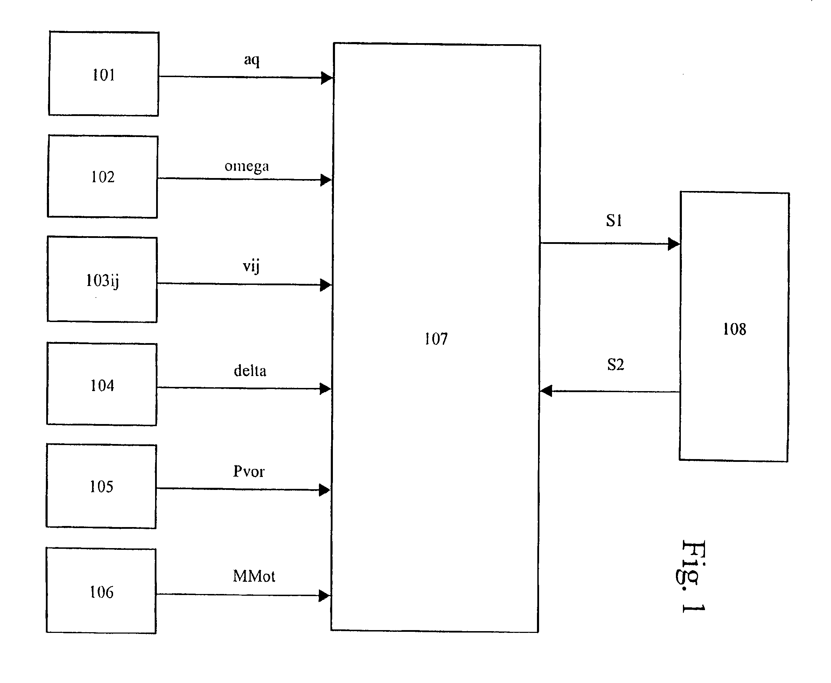

In Figur 1 ist in allgemeiner Form ein Steuergerät 107 dargestellt. Bei diesem Steuergerät handelt es sich bespielsweise um ein Steuergerät, welches im Rahmen einer Fahrdynamikregelung eingesetzt wird. Bezüglich weiterführender Details sei an dieser Stelle auf die vorstehend erwähnte Veröffentlichung "FDR - die Fahrdynamikregelung von Bosch" verwiesen. Dem Steuergerät werden verschiedene Eingangsgrößen zugeführt:Die mit Hilfe eines Querbeschleunigungssensors 101 ermittelte Querbeschleunigung aq, die mit Hilfe eines Gierratensensors 102 ermittelte Gierrate omega des Fahrzeuges, die mit Hilfe von Raddrehzahlsensoren 103ij ermittelten Radgeschwindigkeiten vij, den mit Hilfe eines Lenkwinkelsensors 104 ermittelten Lenkwinkel sowie den vom Fahrer eingestellten, mit Hilfe eines Drucksensors 105 ermittelten Vordruck Pvor. Ferner wird dem Steuergerät ein Kupplungsmoment MMot des Motors, welches von einer Motorsteuereinheit 106 bereitgestellt wird, zugeführt. Ausgehend von diesen Eingangsgrößen erzeugt das Steuergerät gemäß dem in ihm abgelegten Regelkonzept Ansteuersignale S1 für die ihm zugeordneten Aktuatoren 108. Bei den Aktuatoren handelt es sich beispielsweise um Mittel zur Beeinflussung des vom Motor abgegebenen Moments und/oder um den Rädern des Fahrzeugs zugeordnete Bremsen, wobei die Bremsen Teil einer hydraulischen, einer elektrohydraulischen, einer pneumatischen, einer elektropneumatischen oder einer elektromechanischen Bremsanlage sein können. Ausgehend von den Aktuatoren 108 werden dem Steuergerät Signale S2 zugeführt, die dem Steuergerät eine Information über den Betriebszustand der Aktuatoren gibt.

Vorstehend wurde für die Raddrehzahlsensoren die abkürzende Schreibweise 103ij verwendet. Dabei gibt der Index i an, ob es sich um ein Vorderrad (v) oder um ein Hinterrad (h) handelt. Der Index j zeigt an, ob es sich um ein rechtes (r) bzw. um ein linkes (1) Fahrzeugrad handelt. Diese Schreibweise ist für sämtliche Größen bzw. Blöcke, für die sie verwendet wird, identisch.

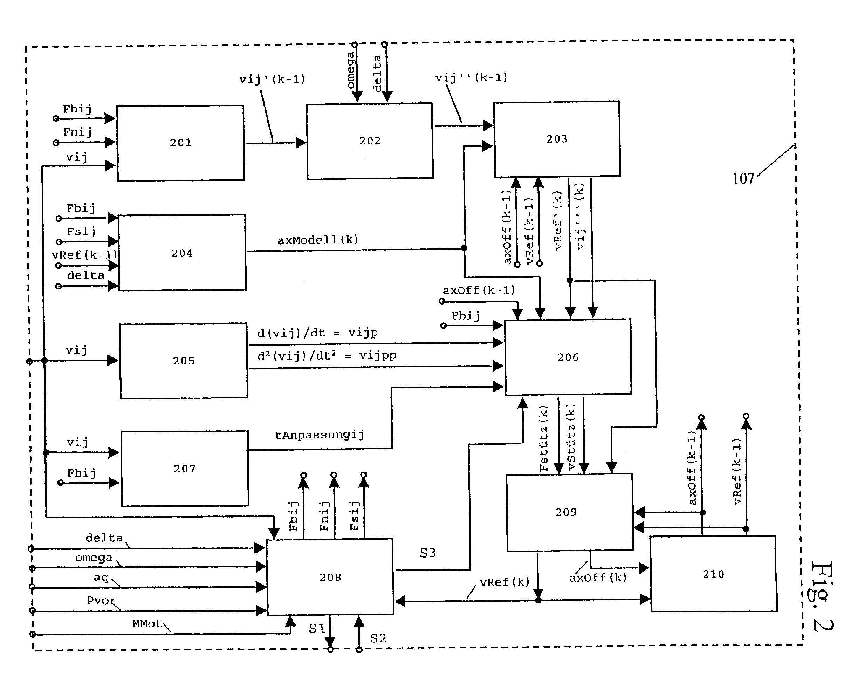

Nachfolgend wird Figur 2 beschrieben. In Figur 2 sind zum einen ein Reglerkern 208 sowie die erfindungswesentlichen Komponenten 201, 202, 203, 204, 205, 206, 207, 209 sowie 210 dargestellt.

Dem Reglerkern 208 werden die Radgeschwindigkeitsgrößen vij, der Lenkwinkel delta, die Gierrate omega des Fahrzeugs, die Querbeschleunigung aq, der vom Fahrer eingestellte Vordruck Pvor, das Kupplungselement MMot des Motors, die ermittelte Geschwindigkeitsgröße vRef sowie die Signale S2 zugeführt. Wie bereits erwähnt, handelt es sich bei dem Steuergerät 107 um ein Steuergerät zur Regelung der Fahrdynamik des Fahrzeugs, mit dem die Gierrate des Fahrzeugs geregelt wird. Hierzu wird die dem Reglerkern 208 zugeführte Gierrate omega mit einem zugehörigen Sollwert verglichen. Dieser Sollwert wird mit Hilfe eines geeigneten Fahrzeugmodells in Abhängigkeit der Geschwindigkeitsgröße vRef und des Lenkwinkels delta ermittelt. Aus der Regelabweichung, die sich aus der gemessenen Gierrate omega und dem zugehörigen Sollwert ergibt, wird ein Sollgiermoment, welches zur Reduzierung der Regelabweichung auf das Fahrzeug aufzubringen ist, ermittelt. Dieses Sollgiermoment wird in Sollschlupfänderungen für die einzelnen Räder umgesetzt. Ausgehend von diesen Sollschlupfänderungen werden Sollschlupfwerte für die einzelnen Räder ermittelt, die mit Hilfe eines unterlagerten Bremsschlupfreglers eingestellt werden. Hierzu wird der jeweilige Sollschlupfwert mit dem jeweils vorliegenden Schlupfwert verglichen und in Abhängigkeit der sich daraus ergebenden Abweichung wird die jeweilige Bremse des Rades angesteuert. Wie man diesen Ausführungen entnimmt, kommt der Geschwindigkeitsgröße vRef eine große Bedeutung zu. Zum einen geht sie in die Ermittlung des Sollwertes für die Gierrate ein. Zum anderen wird die Geschwindigkeitsgröße vRef zur Ermittlung der Schlupfwerte benötigt. Aus diesem Grund ist eine zuverlässige Ermittlung der Geschwindigkeitsgröße vRef erforderlich, so daß die tatsächlich vorliegende Fahrzeuggeschwindigkeit möglichst genau beschrieben wird. Neben den unterlagerten Bremsschlupfregler weist der Reglerkern 208 auch einen unterlagerten Antriebsschlupfregler auf. Sofern erforderlich, werden durch den Antriebsschlupfregler auch Regelungseingriffe durchgeführt. Die vorstehend beschriebene Ansteuerung erfolgt mit Hilfe der Signale S1.

Der Reglerkern 208 ermittelt verschiedene Größen bzw. Signale, die anderen Blöcken zur Verfügung gestellt werden. Zum einen handelt es sich um die an dem jeweiligen Rad bzw. Reifen auftretenden Rad- bzw. Reifenkräfte. So wird im Reglerkern 208 in Abhängigkeit des vom Fahrer eingestellten Vordruckes Pvor, dem Kupplungsmoment MMot sowie der jeweiligen Radgeschwindigkeitsgröße vij die Bremskraft Fbij zwischen dem Reifen und der Fahrbahn in Rollrichtung ermittelt. Hierzu wird für das jeweilige Rad der Drallsatz ausgewertet. Die Bremskraft Fbij wird ausgehend vom Reglerkern 208 den Blöcken 201, 204, 206 sowie 207 zugeführt. Die Aufstandskraft bzw. Normalkraft Fnij des jeweiligen Rades wird im Reglerkern 208 in Abhängigkeit des vom Fahrer eingestellten Vordruckes Pvor, dem Kupplungsmoment MMot, der Querbeschleunigung aq sowie der Gierrate omega ermittelt. Die Aufstandskraft Fnij wird dem Block 201 zugeführt. Die Bremskraft Fsij zwischen dem jeweiligen Reifen und der Fahrbahn quer zur Rollrichtung wird im Reglerkern 208 in Abhängigkeit der Querbeschleunigung aq, der Gierrate omega sowie des Lenkwinkels delta ermittelt. Die Bremskraft Fsij wird dem Block 204 zugeführt. Zum anderen handelt es sich um im Reglerkern 208 intern erzeugte Signale bzw. Größen, die zu S3 zusammengefaßt sind und die dem Block 206 zugeführt werden. Im einzelnen sind dies folgende Signale bzw. Größen: Eine Größe FMotr, die den Ausfall der Motormomentinformation anzeigt, d.h. die anzeigt, daß die Größe MMot nicht zur Verfügung steht. Eine Größe ASR, die anzeigt, daß ein Regelungseingriff vorliegt, mit dem an wenigstens einem Antriebsrad der Antriebsschlupf geregelt wird. Eine Größe Mmot*uege, die das Produkt aus dem Kupplungsmoment MMot des Motors und der Gesamtübersetzung uege aus Getriebe und Differential darstellt und dem vom Motor an den Antriebsrädern erzeugten Antriebsmoment entspricht. Die Größe uege wird beispielsweise in Abhängigkeit der Motordrehzahl und der Kardandrehzahl abgeschätzt. Größen ABSij, die anzeigen, an welchem Rad ein Regelungseingriff zur Regelung des Bremsschlupfes durchgeführt wird. Ein Signal FDRaus, mit dem angezeigt wird, daß der Fahrer das Regelungssystem durch Betätigung eines im Fahrgastraum angebrachten Tasters passiv geschaltet hat. Ein Signal EnNLABS, mit dem angezeigt wird, daß der Notlauf ABS aktiviert ist. Liegt ein Notlauf ABS vor, so werden beispielsweise die Knickpunkte der Fuzzy-Sets modifiziert.

In dem Block 201 wird für die jeweiligen Räder in Abhängigkeit der Bremskraft Fbij, der Aufstandskraft Fnij und der Radgeschwindigkeitsgrößen vij eine lineare Schlupfkorrektur durchgeführt. Aus den dem Block 201 zugeführten Radgeschwindigkeitsgrößen vij werden schlupfbereinigte Radgeschwindigkeitsgrößen vij'(k-1) ermittelt. Hierzu wird für die einzelnen Räder zunächst der jeweils vorliegende Reibungswert in Abhängigkeit der jeweiligen Bremskraft Fbij und der jeweiligen Aufstandskraft Fnij ermittelt. Unter der Annahme, daß sich das jeweilige Rad im linearen Teil der μ-Schlupf-Kurve befindet, kann der am Rad vorliegende Schlupf über eine Geradengleichung aus dem ermittelten Reibwert und der bekannten Reifensteifigkeit ermittelt werden. Die schlupfbereinigten Radgeschwindigkeitsgrößen vij'(k-1) ergeben sich gemäß der Gleichung $vij'(k-1) = \dfrac{vij}{1 - lambdaij}$ , wobei lambdaij der ermittelte Schlupf ist. Die schlupfbereinigten Radgeschwindigkeitsgrößen vij'(k-1) werden dem Block 202 zugeführt.

An dieser Stelle sei darauf hingewiesen, daß die der jeweiligen Größen angefügten Klammern den jeweiligen Zeitschrift darstellen. vij'(k-1) stellt somit die schlupfbereinigten Radgeschwindigkeitsgrößen zum Zeitschritt (k-1) dar.

Im Block 202 wird in Abhängigkeit der ihm zugeführten Gierrate omega sowie des ihm zugeführten Lenkwinkels delta für die schlupfbereinigten Radgeschwindigkeitsgrößen vij'(k-1) eine geometrische Transformation auf den Mittelpunkt der Hinterachse des Fahrzeugs durchgeführt. Durch die geometrische Transformation werden die in den Radgeschwindigkeitsgrößen enthaltenen Geschwindigkeitsanteile, die auf eine Bewegung des Fahrzeugs, insbesondere auf die Drehbewegung des Fahrzeugs um seine Hochachse, zurückgehen, eliminiert. Die Eliminierung ist Grundlage dafür, eine zuverlässige Geschwindigkeitsgröße ermitteln zu können, die die tatsächlich vorliegende Geschwindigkeit des Fahrzeugs in einem guten Maße repräsentiert. Für die Vorderräder erfolgt die Transformation mit Hilfe der Gleichung

$$vvj''(k-1) = \frac{vvj'(k-1) - (l1 + l2) \cdot omega \cdot \sin(delta)}{\cos(delta)} \pm \frac{Spurw}{2} omega$$

und für die Hinterräder mit Hilfe der Gleichung

$$vhj''(k-1) = vhj'(k-1) \pm \frac{Spurw}{2} omega \ .$$

Die Größe 11 stellt den Abstand der Hinterachse zum Schwerpunkt des Fahrzeugs und die Größe 12 den der Vorderachse zum Schwerpunkt des Fahrzeugs dar. Die Größe Spurw entspricht der Spurweite des Fahrzeugs. Für die kurveninneren Räder wird das Pluszeichen und für die kurvenäußeren Räder das Minuszeichen verwendet. Die transformierten Radgeschwindigkeitsgrößen vij''(k-1) werden ausgehend vom Block 202 dem Block 203 zugeführt.

Im Block 204 werden in Abhängigkeit der ihm zugeführten Bremskräfte Fbij und Fsij, der Geschwindigkeitsgröße vRef(k-1) sowie dem Lenkwinkel delta eine die Fahrzeugbeschleunigung beschreibende Größe axModell(k) ermittelt. Bei dieser Größe handelt es sich um eine Modellbeschleunigung, die mit Hilfe des Impulssatzes in Fahrzeuglängsrichtung unter Berücksichtigung der am Fahrzeug angreifenden Längskräfte ermittelt wird. Als Längskräfte sind neben den Bremskräften Fbij und Fsij auch Windwiderstandskräfte zu berücksichtigen. Die Größe axModell(k) wird mit Hilfe der Gleichung

$$axModell(k) = \frac{1}{mf} \{ \ (Fsvl + Fsvr) \cdot \sin(delta) - (Fbvl + Fbvr) \cdot \cos(delta) -$$

$$(Fbhl + Fbhr) - cw \cdot \rho \cdot A \cdot vref(k-1)^2 \ \}$$

ermittelt. Für die Fahrzeugmasse mf wird ein Schätzwert eingesetzt. Der letzte Term in der geschweiften Klammer repräsentiert den Einfluß der Windkraft auf ein fahrendes Fahrzeug. Die Größe axModell(k) wird ausgehend vom Block 204 den Blöcken 203 und 206 zugeführt.

Im Block 203 werden zum einen aus den transformierten Radgeschwindigkeitsgrößen vij''(k-1) extrapolierte Radgeschwindigkeitsgrößen vij'''(k) und zum anderen aus der Geschwindigkeitsgröße vRef'(k-1) eine extrapolierte Geschwindigkeitsgröße vRef'(k) ermittelt. In beiden Fällen erfolgt die Extrapolation in Abhängigkeit der geschätzten Fahrzeugbeschleunigung. Die geschätzte Fahrzeugbeschleunigung setzt sich aus der modellgestützten Fahrzeugbeschleunigung axModell(k) und einer Größe axOff(k-1), die einen Fehleroffset der modellgestützten Fahrzeugbeschleunigung beschreibt, zusammen. Die Ermittlung der extrapolierten Geschwindigkeitsgröße vRef'(k) erfolgt mit Hilfe der Gleichung

$$vref'(k) = vref(k-1) + T0 \cdot axoff(k-1) + T0 \cdot axModell(k)$$

Die Ermittlung der extrapolierten Radgeschwindigkeitsgrößen vij'''(k) erfolgt entsprechend. In vorstehender Gleichung stellt die Größe T0 die Abtastzeit dar. Die Größe vRef'(k) wird den Blöcken 206 und 209, die Größen vij'''(k) werden dem Block 206 zugeführt.

Im Block 205, der eine Signalverarbeitung darstellt, werden aus den Radgeschwindigkeitsgrößen vij zum einen erste Größen vijp ermittelt, die die erste Ableitung $d(vij)/dt$ der Radgeschwindigkeitsgrößen vij bzw. die Radbeschleunigung beschreiben. Zum anderen werden zweite Größen vijpp ermittelt, die die zweite Ableitung $d^2(vij)/dt^2$ der Radgeschwindigkeitsgrößen vij bzw. die Gradienten der jeweiligen Radbeschleunigung vijp beschreiben. Sowohl die Ermittlung der ersten Größen als auch die der zweiten Größen erfolgt mit Hilfe eines FIR-Filters, welches allgemein durch die Gleichung $y_n = \sum_{k=0}^{N} a_k \cdot x_{n-k}$ beschrieben ist. Die Koeffizienten ak sind entsprechend der zu ermittelnden Größe vijp bzw. vijpp geeignet zu wählen. Vorteilhafterweise wird ein FIR-Filter vierter Ordnung verwendet, wobei auch ein FIR-Filter anderer Ordnung bzw. ein anders realisiertes und ebenfalls geeignetes Filtermittel verwendet werden kann. Sowohl die Größen vijp als vijpp werden ausgehend vom Block 205 dem Block 206 zugeführt.

Im Block 207 werden die bei aktiven Bremsschlupfregler eventuell durchgeführten Anpassungsphasen, bei denen einzelne Räder gezielt unterbremst werden, ausgewertet. Dies erfolgt vor dem Hintergrund, daß die gezielt unterbremsten Räder zur Ermittlung der Radgeschwindigkeitsgröße gut geeignet sind. In diesem Zusammenhang wird im Block 207 in Abhängigkeit der ihm zugeführten Radgeschwindigkeitsgrößen vij und der Bremskräfte Fbij eine Zeitgröße tAnpassungij ermittelt, die die Zeitdauer der Anpassungsphase des jeweiligen Rades beschreibt, sofern dieses Rad unterbremst wird. Die Ermittlung der Zeitgröße tAnpassungij wird in Abhängigkeit der Bremskraft Fbij gestartet. Bei einer Unterbremsung wird der Bremsdruck und somit auch die Bremskraft Fbij des entsprechenden Rades abgesenkt. Folglich stellt eine Abnahme der Bremskraft Fbij den Startzeitpunkt für die Ermittlung der Zeitgröße dar. Die Ermittlung der Zeitgröße ist beendet, wenn in Abhängigkeit der Radgeschwindigkeit festgestellt wird, daß sich das entsprechende Rad stabil verhält. Hierzu kann beispielsweise das zeitliche Verhalten der Radgeschwindigkeitsgröße vij ausgewertet werden. Die Zeitgröße tAnpassungij ist durch eine Obergrenze in ihrem Wert begrenzt. Die Zeitgröße wird dem Block 206 zugeführt.

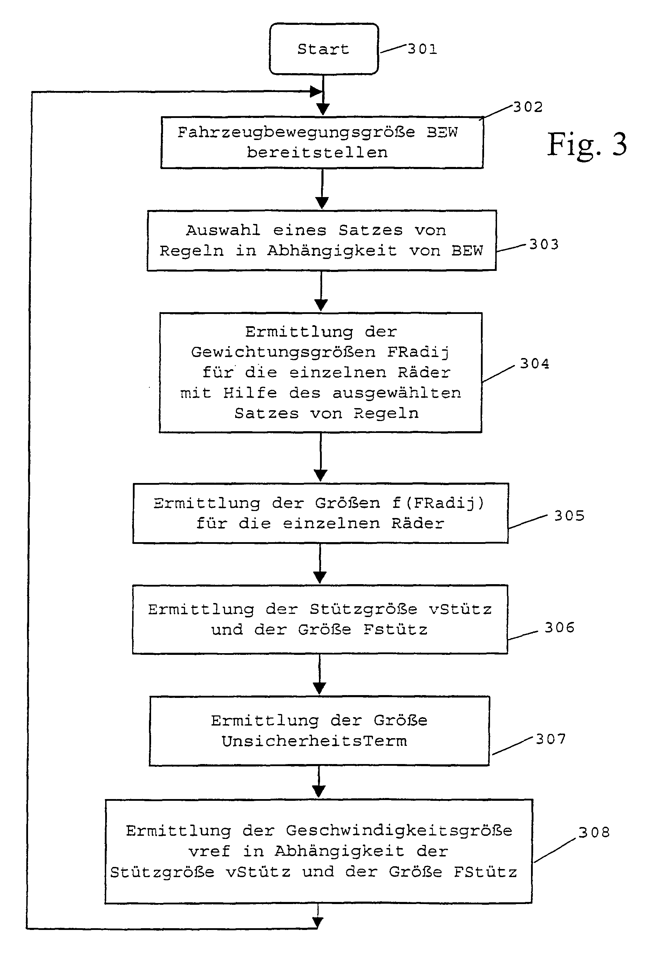

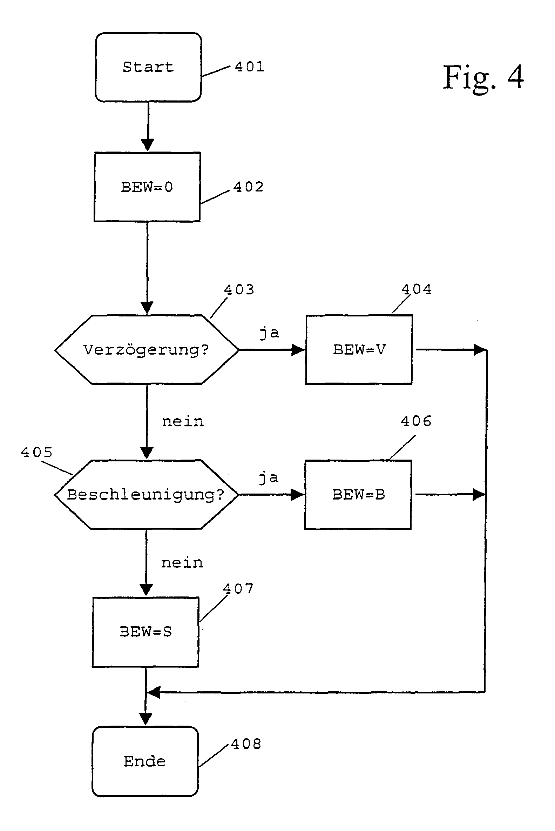

Im Block 206 findet eine Radstabilitätsbetrachtung statt, die auf einer Fuzzy-Logik basiert. Auf die konkrete Vorgehensweise wird in Zusammenhang mit den Figuren 3 und 4 ausführlich eingegangen. Als Eingangsgrößen für die Radstabilitätsbetrachtung dienen die Größen vij'''(k), vRef'(k), axModell(k), axoff(k-1), Fbij, vijp, vijpp, tAnpassungij sowie verschiedene zu S3 zusammengefaßte Größen bzw. Signale. Mit Hilfe der im Block 206 implementierten Fuzzy-Logik wird eine Stützgröße vStütz(k) und eine Bewertungsgröße Fstütz(k) ermittelt, die beide dem Block 209 zugeführt werden.

Im Block 209 wird in Abhängigkeit der ihm zugeführten Größen vStütz(k) und Fstütz(k) eine Korrektur der Geschwindigkeitsgröße vRef(k) gemäß nachfolgender Gleichung

$$vref(k) = vref'(k) + kovx \cdot (vstütz(k) - vref(k-1))$$

durchgeführt. Die Größe kovx wird in geeigneter Weise aus der Bewertungsgröße Fstütz(k) ermittelt. Die in er Gleichung dargestellte Vorgehensweise wird als Stützung der Geschwindigkeitsgröße vRef durch die Stützgröße vStütz bezeichnet. Die im Block 209 ermittelte Geschwindigkeitsgröße vRef(k) wird den Blöcken 208 und 210 zugeführt.

In entsprechender Weise wird im Block 209 die Größe axOff(k) gemäß der Gleichung

$$axoff(k) \cdot T0 = T0 \cdot axoff(k-1) + koaxoff \cdot (vstütz(k) - vref(k-1))$$

ermittelt. Auch diese Vorgehensweise stellt eine Stützung dar. Der Faktor koaxOff wird ebenfalls in geeigneter Weise aus der Bewertungsgröße Fstütz ermittelt. Die Größe axOff(k) wird dem Block 210 zugeführt.

Der Block 210 stellt ein an sich bekanntes Speichermittel dar, mit dessen Hilfe die Größen axOff und vRef eines vorherigen Zeitschrittes bereitgestellt werden. D.h. wird im Block 209 die Geschwindigkeitsgröße vRef für den Zeitschritt k ermittelt, so stellt der Block 210 die Geschwindigkeitsgröße vRef und die Größe axOff des vorigen Zeitschrittes k-1 zur Verfügung. Die vom Block 210 zur Verfügung gestellte Größe axOff(k-1) wird den Blöcken 203, 206 und 209 zugeführt, die vom Block 210 zur Verfügung gestellte Größe vRef(k-1) wird den Blöcken 203, 204 sowie 209 zugeführt.

Der in den Blöcken 203 (Extrapolation) und 209 (Korrektur bzw. Stützung) stattfindenden Ermittlung der Geschwindigkeitsgröße vRef und der im Block 209 stattfindenden Ermittlung der Größe axOff (Korrektur bzw. Stützung), liegt die Anwendung eines stationären zeitdiskreten Kalman-Bucy-Filters zugrunde. Solch ein Filter wird allgemein durch die Gleichung

$$\hat{x}(k) = F \cdot \hat{x}(k-1) + \hat{y}(k) + K\{z(k) - H(F \cdot \hat{x}(k-1) + \hat{y}(k)\}$$

beschrieben. In dieser Gleichung stellt $\hat{x}(k)$ den gesuchten Zustand zum Zeitschritt k dar; Ff stellt die Dynamikmatrix des Systems dar; y(k) stellt die Eingangsgröße dar; K stellt eine Bewertungsmatrix dar; z(k) stellt die Größe dar, mit der gestützt wird; H stellt eine Ausgangsmatrix dar.

Der Ermittlung der Geschwindigkeitsgröße liegt ein System zweiter Ordnung zugrunde. Dieses System besteht aus einem Modell für die Geschwindigkeitsgröße vRef und einem Modell für den Fehlerterm T0*axOff, mit dem unbekannte Fehler in der Beschleunigungsgröße axModell sowie dem Modellansatz kompensiert werden. Gemäß dieses Ansatzes stellt sich der gesuchte Zustand als $x=[vref,axoff \cdot T0]$ und die Eingangsgröße als $y=[axModell \cdot T0.0]$ dar. An dieser Stelle sei bemerkt, daß die Geschwindigkeitsgröße vRef die Fahrzeuglängsgeschwindigkeit im Mittelpunkt der Hinterachse darstellt. Im Modellensatz wird die Geschwindigkeitsgröße vRef als Integral der Fahrzeugbeschleunigung gewählt. Dieser Ansatz läßt sich durch folgende Gleichung

$$vref(k) = vref(k-1) + T0 \cdot axoff(k-1) + T0 \cdot axModell(k)$$

beschreiben. Als Modellansatz für den Fehlerterm T0*axOff wird eine Nulldynamik gemäß der Gleichung

$$axoff(k) \cdot T0 = axoff(k-1) \cdot T0$$

gewählt. Ausgehend von den vorstehend beschriebenen Ansätzen bzw. Definitionen ergeben sich für die Geschwindigkeitsgröße vRef und den Fehlerterm T0*axOff folgende Schätzgleichungen:

$$vref(k) = vref(k-1) + T0 \cdot axoff(k-1) + T0 \cdot axModell(k) +$$
$$kovx \cdot (vst\ddot{u}tz(k) - vref(k-1))$$

$$axoff(k) \cdot T0 = T0 \cdot axoff(k-1) + koaxoff \cdot (vst\ddot{u}tz(k) - vref(k-1))$$

Diese Schätzgleichungen können aus den im Zusammenhang mit den Blöcken 203 und 209 aufgeführten Gleichungen hergeleitet werden.

Die beiden in den Schätzgleichungen enthaltenen Größen kovx bzw. koaxOff werden in an sich bekannter Weise entsprechend einem Berechnungsverfahren für ein Kalmann-Bucy-Filter aus der Bewertungsgröße Fstütz ermittelt. Wie diesen beiden Schätzgleichungen zu entnehmen ist, wird die jeweilige Korrektur bzw. Stützung durch den Faktor kovx bzw. durch den Faktor koaxOff beeinflußt. Zusammenfassend kann festgehalten werden: Mit Hilfe der Bewertungsgröße Fstütz wird die Stärke der Korrektur bzw. Stützung beeinflußt.

Mit Hilfe der Größe FStütz wird die Stärke der durchzuführenden Korrektur bzw. Stützung der Geschwindigkeitsgröße vref bestimmt. Aus FStütz wird mit Hilfe einer funktionalen Abhängigkeit ein Maß für das System- und Meßrauschen ermittelt. Hieraus ergibt sich dann eine zeitlich veränderliche Matrix K, die den stationären Filter adaptiv an die Unsicherheit der "Meßgröße" vStütz anpaßt. Die funktionale Abhängigkeit der Rauschgrößen von FStütz und daraus über den Kalman-Ansatz die Koeffizienten kovRef und koaxOff der Kalman-Matrix zur Beobachtung von vRef und axOff können mittels zweier Kennlinien mit beliebig vielen Punkten für jeweils einen stationären Kalman-Filter realisiert werden.

Im folgenden wird Figur 3 beschrieben, die mit Hilfe eines Flußdiagrammes die im Block 206 ablaufende, auf einer Fuzzy-Logik basierende Radstabilitätsbetrachtung darstellt. Die Radstabilitätsbetrachtung beginnt mit einem Schritt 301, an den sich ein Schritt 302 anschließt. Im Schritt 302 wird eine Fahrzeugbewegungsgröße BEW bereitgestellt, die zumindest die Fahrzeugbewegung in Längsrichtung charakterisiert. Die Bereitstellung der Fahrzeugbewegungsgröße BEW wird in Zusammenhang mit Figur 4 ausführlich beschrieben. An dieser Stelle sei lediglich erwähnt, daß die Fahrzeugbewegungsgröße wenigstens in Abhängigkeit der Radgeschwindigkeitsgrößen vij und/oder der zeitlichen Ableitungen vijp der Radgeschwindigkeitsgrößen und/oder in Abhängigkeit der die Längsbeschleunigung des Fahrzeugs beschreibenden Größe axModell und/oder einer Größe ASR, die eine durchgeführte Antriebsschlupfregelung anzeigt, ermittelt wird. Anschließend an den Schritt 302 wird ein Schritt 303 ausgeführt.

Wie schon erwähnt, wird die Radstabilitätsbetrachtung mit Hilfe einer Fuzzy-Logik ausgeführt. Eine Fuzzy-Logik ist im allgemeinen folgendermaßen aufgebaut: Für eine linguistische Variable, beispielsweise die Radgeschwindigkeit oder die Radbeschleunigung werden Zugehörigkeitsfunktionen, sogenannte Fuzzy-Sets definiert bzw. aufgestellt. Mit Hilfe der Zugehörigkeitsfunktionen findet eine Fuzzyfikation der der Fuzzy-Logik zugeführten Eingangswerte, die scharfe Zahlen darstellen, statt. D.h. die Eingangswerte werden auf die linguistische Werteskala abgebildet. An die Fuzzyfikation schließt sich für gewöhnlich ein "approximatives Schließen" (Fuzzy-Reasoning) an, d.h. mit Hilfe von linguistischen Variablen werden zur Beschreibung des Systemverhaltens eine Reihe von Aussagen getroffen, die für bestimmte Eingangswertkombinationen die dazu zugehörenden Ausgangswertkombinationen in Form von IF...THEN....Regeln festlegen. Anschließend daran wird üblicherweise eine Defuzzyfikation vorgenommen, d.h. aus der unscharfen Ausgangsmenge wird über die einzelnen Stellgrößen ein scharfer Einstellwert erzeugt. Hierzu wird für gewöhnlich die Fläche unter den Kurvenverläufen der Zugehörigkeitsfunktionen herangezogen.

Die gemäß dem erfindungsgemäßen Verfahren angewandte Vorgehensweise unterscheidet sich von der bei einer Fuzzy-Logik herkömmlichen Vorgehensweise wie folgt: Da die für das jeweilige Rad gesuchte Ausgangsgröße, die mit der Radstabilitätsbetrachtung ermittelt werden soll eine Wahrscheinlichkeit (Gewichtungsgröße Fradij) und kein Stellsignal ist, mit dem beispielsweise ein Regler angesteuert wird und dessen Wert einer definierten Reaktion entsprechen muß, genügt es, nur die interessierende eine Hälfte der Fuzzy-Sets zu betrachten bzw. zu berechnen. Das Komplement der Fuzzy-Sets muß nicht betrachtet werden. Diese Vorgehensweise hat folgenden großen Vorteil: Da die erhaltenen linguistischen Variablen bereits Wahrscheinlichkeiten mit der entsprechenden Skalierung sind, entfällt eine anschließende Defuzzyfizierung, die meist den größten Aufwand darstellt. Es werden somit nur skalare Signale miteinander verknüpft. Zur Verknüpfung der linguistischen Variabeln werden beispielsweise folgende in der Fuzzy-Logik bekannte Operatoren verwendet:

$$\text{Fuzzy-UND:} \quad y = \text{Gamma} * \text{MIN}(x1,x2) + (1-\text{Gamma}) * \frac{x1+x2}{2}$$

$$\text{Fuzzy-ODER:} \quad y = \text{Gamma} * \text{MAX}(x1,x2) + (1-\text{Gamma}) * \frac{x1+x2}{2}$$

mit Gamma $\in$ [0,1]

Dabei stellen die Größen x1 bzw. x2 Eingangsgrößen dar, die Größe y stellt die Ausgangsgröße dar. Für die einzelnen Verknüpfungen wird der Größe Gamma ein fest vorgegebener Wert zugewiesen.

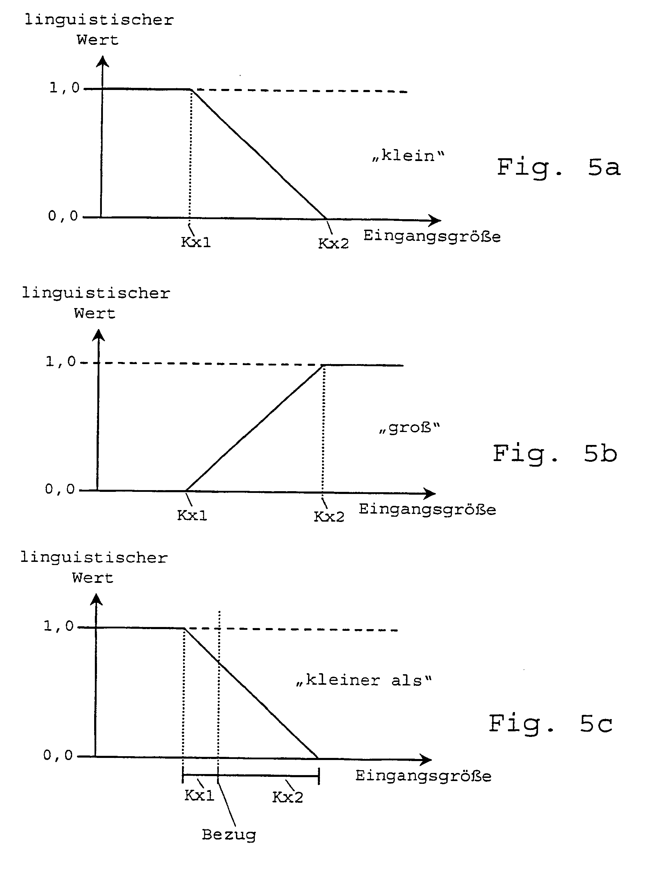

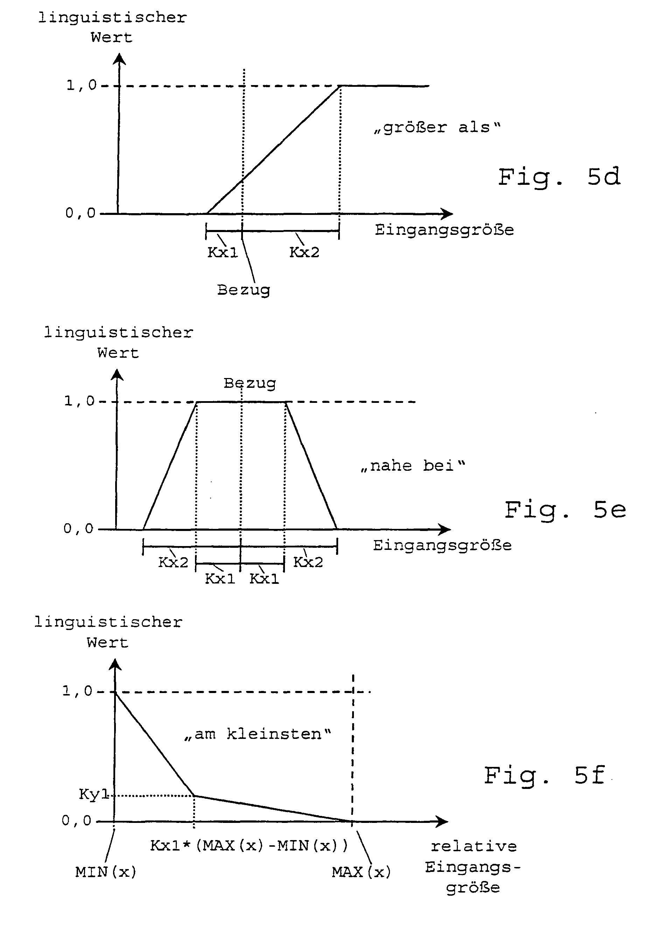

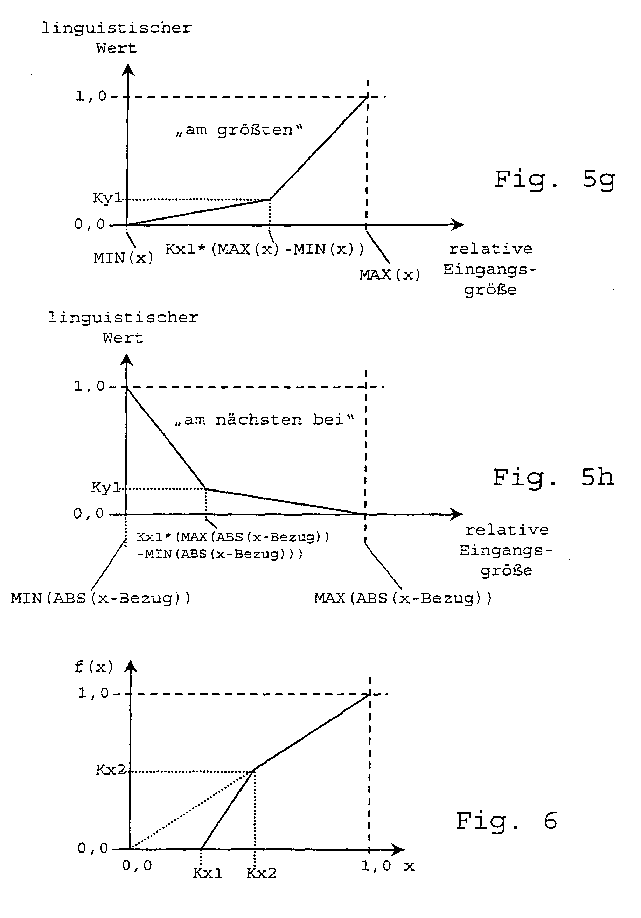

Zur Berechnung der linguistischen Variabeln werden folgende Fuzzy-Sets verwendet: "klein" (Figur 5a) "am kleinsten" (Figur 5f), "groß" (Figur 5b), "am größten" (Figur 5g), "kleiner als" (Figur 5c), "größer als" (Figur 5d), "nahe bei" (Figur 5e) und "am nächsten bei" (Figur 5h). Auf die einzelnen Fuzzy-Sets wird im Zusammenhang mit der Beschreibung der Figur 5 noch ausführlich eingegangen.

Im Schritt 303 findet eine Auswahl eines Satzes von Regeln in Abhängigkeit der Fahrzeugbewegungsgröße BEW statt. Somit werden unter Berücksichtigung der ermittelten Fahrsituation, die durch die Fahrzeugbewegungsgröße BEW beschrieben wird, die Gewichtungsgrößen Fradij gebildet, welche die Eignung der jeweiligen Radgeschwindigkeitsgröße vij zur Korrektur bzw. Stützung der Geschwindigkeitsgröße vRef darstellt.

Zeigt die Fahrzeugbewegungsgröße BEW an, daß die Fahrsituation Beschleunigung vorliegt, so wird nachfolgender Satz Regeln ausgewählt:

```
FRadij =      (FRadij aus reiner Stabilitätsbetrachtung (FRStij))
        oder (Fradij aus Situationsbetrachtung (FRSiij))
        oder (FRadij aus zeitlichem Unsicherheitsterm (FRZij))

FRStij =      (Betrag vijpp klein)
        und  (    (Betrag vijpp am Kleinsten)
             Oder (Abstand vijppmin zu vijppmax klein))
        und  (Betrag vijp klein)
        und  (    (vijp nahe bei axModell+axOff      (nicht bei FMotr))
             oder (Betrag axOff groß (nicht bei FMotr)))
        und  (    (    (vij''' nahe bei vRef')
                  und  (    (vij''' am Nächsten bei vRef')
                       Oder (Abstand vijmin zu vijmax klein)))
             Oder (    (vij''' kleiner als vRef'      (vij''' > 2*vijMin))
                  und  (Fbij klein                    (vij''' > 2*vijMin))))

FRSiij =      (vij''' nahe bei vRef')
        und  (vij''' kleiner als vRef')
        und  (Anzahl Räder mit [vij''' kleiner als vRef'] groß)

FRZij =       (UnsicherheitsTerm groß)
        und  (    (    (vij''' kleiner als vRef')
                  und  (Fbij klein))
             oder (    (vij''' nahe bei vRef')
                  und  (Betrag vijp klein)))
```

Zeigt die Fahrzeugbewegungsgröße BEW an, daß die Fahrsituation Verzögerung vorliegt, so wird folgender Satz Regeln ausgewählt:

```
FRadij =      (    (FRadij aus reiner Stabilitätsbetrachtung (FRStij))
             und  (FRadij aus Situationsbetrachtung (FRSiij)))
        oder (FRadij aus Unterbremsbetrachtung (FRUbFij))
        oder (FRadij aus zeitlichem Unsicherheitsterm (FRZij))
```

```
FRStij =         (Betrag vijpp klein)
        und (    (Betrag vijpp am Kleinsten)
            Oder (Abstand vijppmin zu vijppmax klein))
        und  (Betrag vijp klein)
        und  (vijp nahe bei axModell+axOff    (nicht bei [FMotr und !ABS]))
        und (    (vij''' am Größten)
            oder (Abstand vijmin zu vijmax klein))

FRSiij =        (    (vij''' kleiner vRef')
            und  (vijp klein)
            und (    (vij''' am Größten)
                oder (Abstand vijmin zu vijmax klein))
            und  (Betrag vijpp klein                  (vij''' > 2*vijMin))
            und  (Anzahl Räder mit [Betrag vijpp sehr klein] groß
                                                (vij''' > 2*vjMin)))
        oder (   (vij''' größer als vRef')
            und  (Fbij groß)
            und  (vijp groß)
            und (    (vij''' nahe bei vRef')
                oder (Abstand vijmin zu vijmax klein)))
        oder (   (tAnpassungij groß                (Rad in Anpassung))
            und  (vijp klein)
            und (    (vij''' am Größten)
                oder (Abstand vijmin zu vijmax klein)))
        oder (   (vij''' nahe bei vRef')
            und  (vijp groß)
            und  (Anzahl ABS geregelter Räder klein))

FRUbFij =        (Betrag vijp klein)
        und (Abstand vijmin zu vijmax klein)
        und (Abstand vijpmin zu vijpmax klein)
        und (Abstand vijppmin zu vijppmax klein)
        und (vij''' kleiner als vRef'               (vij''' > 2*vijMin))

FRZij =        (UnsicherheitsTerm groß)
        und (vij''' kleiner als vRef')
        und (    (vij''' am Größten)
            oder (Abstand vijmax zu vijmin klein)
```

Zeigt die Fahrzeugbewegungsgröße BEW an, daß eine sonstige Fahrsituation vorliegt, so wird folgender Satz Regeln ausgewählt:

```
Fradij =      (FRadij aus reiner Stabilitätsbetrachtung (FRStij))
        oder (Fradij aus Situationsbetrachtung (FRSiij, nur bei FMotr))
        oder (Fradij aus zeitlichem Unsicherheitsterm (FRZij)

FRStij =        (Betrag vijpp klein)
        und (    (Betrag vijpp am Kleinsten)
            oder (Abstand vijppmin zu vijppmax klein))
        und  (Betrag vijp klein)
        und  (vijp nahe bei axModell+axOff (nicht bei FMotr))
        und (    (    (vij''' nahe bei vRef')
                und (    (vij''' am Nächsten bei vRef')
                    oder (Abstand vijmin zu vijmax klein)))
            oder (   (vij''' kleiner als vRef')
                und  (Abstand vijmin zu vijmax klein)))

FRSiij =       (vij''' nahe bei vRef')
        und (vij''' kleiner als vRef')
        und (Anzahl Räder mit [vij''' kleiner als vRef'] groß)

FRZij = Null
```

Anschließend an den Schritt 303 wird ein Schritt 304 ausgeführt, in welchem für die einzelnen Räder mit Hilfe des ausgewählten Satzes von Regeln die Gewichtungsgrößen FRadj ermittelt werden.

Die Vorgehensweise bei der Ermittlung der Gewichtungsgrößen Fradij soll exemplarisch mit Hilfe des Satzes Regeln, der für die Fahrsituation Beschleunigung verwendet wird, erklärt werden. Die mit Hilfe dieses Satzes ermittelte Größe Fradij setzt sich aus mehreren Einzelgewichtungsgrößen bzw. Einzelwahrscheinlichkeiten zusammen, d.h. die Gewichtungsgröße Fradij ergibt sich als logische Verknüpfung von mehreren Einzelgewichtungsgrößen. Im betrachteten Fall setzt sich die Gewichtungsgröße Fradij aus folgenden Einzelgewichtungsgrößen zusammen: Einer Stabilitätsgröße FRStij, die ein Maß für die Stabilität des jeweiligen Rades darstellt und die reine Stabilität des jeweiligen Rades beschreibt. Die Größe FRStij wird in erster Linie in Abhängigkeit der Radgröße vijpp ermittelt. Einer Situationsgröße FRSiij, die die aktuelle Situation der Räder beschreibt. In diese Situationsgröße geht zumindest die Lage der jeweiligen Radgeschwindigkeitsgröße vij bzgl. der Geschwindigkeitsgröße vRef ein und/oder wieviele der Fahrzeugräder eine vorgegebene Bedingung erfüllen. Im vorliegenden Fall geht die Anzahl der Räder ein, deren Radgeschwindigkeitsgröße vij kleiner als die Geschwindigkeitsgröße vRef ist. Einer Gütegröße FRZij, die ein Maß für die Güte der in den zurückliegenden Zeitschritten ermittelten Gewichtungsgrößen FRadij darstellt. Die Gütegröße FRZij stellt einen integralen Unsicherheitsterm der wahrscheinlichen Fehlerbehaftung der Geschwindigkeitsgröße vRef dar. Die Bedeutung der Größe FRZij kann folgendermaßen beschrieben werden: Ist die Bewertungsgröße Fstütz längere Zeit klein, so wird die Geschwindigkeitsgröße vRef in erster Linie durch Extrapolation ermittelt. Da die Information der einzelnen Räder, die durch die Stützung in die Geschwindigkeitsgröße vRef eingehen würde, lediglich in einem sehr geringen Maße berücksichtigt wird, kann es zu einer fehlerbehafteten Ermittlung der Geschwindigkeitsgröße vRef kommen. Um diese Unzulänglichkeit erkennen zu können und um ihr entgegenwirken zu können, wird die Größe FRZij ermittelt. Den wichtigsten Anteil zu der Gewichtungsgröße trägt die Stabilitätsgröße bei. Für die Stabilitätsgröße wird in erster Linie die Regel (Betrag vijpp klein) ausgewertet. Je kleiner vijpp ist, desto größer ist der sich für diese Regel ergebende Wert und um so stärker wird dieses Rad zur Stützung der Geschwindigkeitsgröße herangezogen. Sich so verhaltende Räder können allerdings auch aufgrund von Reglereingriffen auftreten. Da diese Räder nicht als stationär anzusehen sind und sich somit zur Stützung der Geschwindigkeitsgröße vref weniger gut eignen, werden die anderen beiden Einzelgewichtungsgrößen verwendet, mit denen solche Räder erkannt werden können.

Im Zusammenhang mit der Fahrsituation Verzögerung wird ferner eine Einzelgewichtungsgröße FRUBFij ermittelt bzw. ausgewertet, die die für das jeweilige Rad vorliegende Anpassungsphase bzw. das Unterbremsen beschreibt.

Verschiedene Regeln weisen in geschweifte Klammern eingefaßte Ausdrücke auf, die teilweise negiert sind und teilweise nicht negiert sind. Als Beispiel für eine Regel mit einem negierten Ausdruck sei [vijp nahe bei axModell+axOff {nicht bei FMotr}] angeführt. Die in der geschweiften Klammer enthaltene Größe FMotr zeigt an, ob die Motormoment-Information ausgefallen ist oder nicht. Die Regel (vijp nahe bei axModell+axOff) wird nur dann ausgewertet, wenn die Motormoment-Information nicht ausgefallen ist. Bei anderen negierten Ausdrücken erfolgt die Auslegung entsprechende. Als Beispiel für einen nicht negierten Fall sei [vij''' kleiner als vRef' {vij''' > 2*vijMin}] angeführt. Die Regel (vij''' kleiner als vRef') wird nur dann ausgewertet, wenn die Bedingung {vij''' > 2*vijMin} erfüllt ist.

Die Bestimmung des Wertes der Gewichtungsgröße Fradij erfolgt folgendermaßen: Zunächst werden für die Stabilitätsgröße FRStij, für die Situationsgröße FRSiij und für die Gütegröße FRZij die jeweiligen Werte ermittelt. Die dabei angewandte Vorgehensweise soll anhand der Gütegröße FRZij dargestellt werden. Die Gütegröße FRZij setzt sich aus den Regeln

| (UnsicherheitsTerm groß) | (E1) |
|---|---|
| (vij''' kleiner als vRef') | (E2) |
| (Fbij klein) | (E3) |
| (vij''' nahe bei vRef') | (E4) und |
| (Betrag vijp klein) | (E5) |

zusammen.

Zunächst werden die Regeln (E1) bis (E5) ausgewertet. Dies erfolgt mit Hilfe der in Figur 5 dargestellten Zugehörigkeitsfunktionen. Dabei nehmen die Regeln und somit auch die Einzelgewichtungsgrößen bzw. die Gewichtungsgrößen beliebige Werte zwischen 0 und 1 an.

Als Beispiel sei an dieser Stelle die Auswertung der Regel (E3) beschrieben, für die die in Figur 5a dargestellte Zugehörigkeitsfunktion zu betrachten ist. Die Bremskraft Fbij stellt die Eingangsgröße dar. Zur Ermittlung des Ergebnisses der Regel wird der Wert der Bremskraft Fbij auf die Abszisse aufgetragen. Das Ergebnis der Regel ergibt sich als Schnittpunkt der durch den Abszissenpunkt gehenden Senkrechten mit der Zugehörigkeitsfunktion. In entsprechender Weise werden die Ergebnisse der restlichen Regeln ermittelt. Die Einzelergebnisse werden in entsprechender Weise unter Verwendung der vorstehend beschriebenen Fuzzy-Operatoren zu der Gütegröße FRZij verknüpft. In entsprechender Weise werden auch die Stabilitätsgröße FRStij und die Situationsgröße FRSiij ermittelt. Die drei Größen FRStij, FRSiij und FRZij werden jeweils über den Fuzzy-Operator "oder" zu der Gewichtungsgröße Fradij verknüpft.

Zusammenfassend kann festgehalten werden: Zunächst werden für die Regeln mit Hilfe der Zugehörigkeitsfunktionen die Ergebnisse ermittelt. Aus diesen Ergebnissen werden unter Verwendung der Fuzzy-Operatoren die Einzelgewichtungsgrößen ermittelt, aus denen wiederum, ebenfalls unter Verwendung der Fuzzy-Operatoren die Gewichtungsgröße ermittelt wird.

Die vorstehenden Ausführungen gelten in entsprechender Weise auch für die Sätze von Regeln, die für die Fahrsituationen Verzögerung und "sonstige Fahrsituation" angewendet werden.

An dieser Stelle seien einige Regeln herausgegriffen:

- Vor der Auswertung der Regel [Abstand vijppmin zu vijppmax klein] sind zunächst die Größen vijppmin und vijppmax zu ermitteln und aus diesen dann die Differenz zu bestimmen.
- Die Auswertung der Regel [Anzahl Räder mit [vij''' kleiner als vRef'] groß] läuft folgendermaßen ab: Für sämtliche Räder wird zunächst das Ergebnis der Regel [vij''' kleiner als vRef'] ermittelt. Die Ergebnisse werden aufsummiert. Diese Summe wird mit Hilfe der in Figur 5b dargestellten Zugehörigkeitsfunktion ausgewertet.
- Für die Auswertung der Regel [Anzahl ABS geregelter Räder klein] wir zunächst anhand der in S3 enthaltenen Signale bzw. Größen ABSij ermittelt, wieviele der Räder sich in einer ABS-Regelung befinden. Der sich dabei ergebende Wert wird mit Hilfe der in Figur 5a dargestellten Zugehörigkeitsfunktion ausgewertet.

Die in den Regeln verwendeten Minimal- bzw. Maximalwerte, beispielsweise vijppmin und vijppmax, werden mit Hilfe geeigneter und aus dem Stand der Technik bekannter Speicher- und Vergleichsmittel ermittelt. Zusammenfassend seien an dieser Stelle die Eingangsgrößen, die für die Radstabilitätsbetrachtung ausgewertet werden aufgeführt: axoff, vij''', vijp, vijpp, Fbij und tAnpassungij. Bei der Darstellung der verschiedenen Sätze von Regeln wurde bei den einzelnen Größen der Übersichtlichkeit halber auf die Angabe des jeweiligen Zeitschrittes verzichtet.

Anschließend an den Schritt 304 wird ein Schritt 305 ausgeführt, in dem die Größen f(Fradij) ermittelt werden. Diese Ermittlung erfolgt mit Hilfe der in Figur 6 dargestellten Funktion, wobei die Größe x das Eingangssignal darstellt, welches mit Hilfe des Verlaufes der Funktion f(x) bewertet wird. Der Verlauf der Funktion f(x) ist abschnittsweise definiert: Zwischen den Abszissenwerten 0 und Kx1 nimmt die Funktion f(x) den Wert 0 an, zwischen den Abszissenwerten Kx1 und Kx2 weist die Funktion f(x) die Steigung Kx2/(Kx2-Kx1) auf und zwischen den Asbzissenwerten Kx2 und 1 hat die Funktion f(x) die Steigung der ersten Winkelhalbierenden. Dieser Verlauf bewirkt, daß kleine Werte der Eingangsgröße ausgeblendet (Werte zwischen 0 und Kx1) bzw. gedämpft (Werte zwischen Kx1 und Kx2) werden.

An den Schritt 305 schließt sich ein Schritt 306 an, in dem zum einen die Stützgröße vstütz und zum anderen die Bewertungsgröße Fstütz ermittelt wird. Die Stützgröße wird in Abhängigkeit der Größen f(Fradij), d.h. aus den mit der Funktion f(x) bewerteten Gewichtungsgrößen Fradij und den schlupfkorrigierten und transformierten Radgeschwindigkeitsgrößen vij''' ermittelt. Dies erfolgt beispielsweise gemäß der Funktion

$$
\text{vstütz} = \frac{\Sigma \left( \text{vij}''' * \left( f(\text{FRadij}) \right)^2 \right)}{\Sigma \left( f(\text{FRadij}) \right)^2}
$$

wobei die Summenbildung über alle Räder erfolgt.

Die Bewertungsgröße Fstütz wird in Abhängigkeit der Größen f(Fradij), beispielsweise gemäß der Beziehung

$$
\text{FStütz} = a*\text{MAX}(f(\text{FRadij}))+(1-a)*\text{MIN}(\Sigma(f(\text{FRadij})),1)
$$

mit $a \in [0,1]$ ermittelt. Die Bewertungsgröße Fstütz repräsentiert die Wahrscheinlichkeit der Eignung der Größe vstütz zur Stützung der Geschwindigkeitsgröße vref. In erster Linie hängt die Größe Fstütz vom Maximum der Fradij ab, d.h. von der Gewichtungsgröße des Rades, welches am besten für die Ermittlung der Größe vstütz geeignet ist, und somit auch den größten Beitrag zu der Größe vstütz beiträgt. Die Summen- und Maximumbildung erfolgt über alle Räder.

Anschließend an den Schritt 306 wird ein Schritt 307 ausgeführt, in welchem eine Größe UnsicherheitsTerm ermittelt wird. Die Größe UnsicherheitsTerm wird in Abhängigkeit der Bewertungsgröße ermittelt, beispielsweise gemäß der Beziehung

UnsicherheitsTerm = MAX(0, UnsicherheitsTerm(k-1)

- KAb * (Fstütz - P_FRefP)          für Fstütz >= P_FRefP
- KAn * (Fstütz - P_FRefP)          für Fstütz < P_FRefP )

mit $P\_FRefP \in [0,1]$.

Die Größe UnsicherheitsTerm dient der Abschätzung der möglichen Fehlerbehaftung der Geschwindigkeitsgröße vref. Die Größe UnsicherheitsTerm ist ein integrales Maß dafür, daß bereits längere Zeit kleine Werte von Fstütz zu keiner ausreichenden Korrektur der Geschwindigkeitsgröße geführt haben. In obiger Gleichung sind KAn und KAb zu applizierende Verstärkungsfaktoren, wobei KAn << KAb zu wählen ist.

In dem auf den Schritt 307 folgenden Schritt 308 wird die Geschwindigkeitsgröße vref in Abhängigkeit der Stützgröße vstütz und der Bewertungsgröße Fstütz ermittelt. Diese Ermittlung erfolgt unter Verwendung der bereits weiter oben aufgeführten Gleichungen. Neben den beiden Größen vstütz und Fstütz gehen in die Ermittlung der Geschwindigkeitsgröße vref außerdem noch die Größen axModell und axoff ein.

Anschließend an den Schritt 308 wird erneut der Schritt 302 ausgeführt, d.h. es wird ausgehend von dem aktuellen Zeitschritt die Geschwindigkeitsgröße vref für den nachfolgenden Zeitschritt ermittelt.

Nachfolgend wird auf Figur 4 eingegangen. In dieser Figur ist die im Schritt 302 stattfindende Bereitstellung der Fahrzeugbewegungsgröße BEW dargestellt. Die Bereitstellung bzw. Ermittlung der Fahrzeugbewegungsgröße BEW beginnt mit einem Schritt 401, an den sich ein Schritt 402 anschließt, in welchem die Größe BEW initialisiert wird, d.h. ihr der Wert 0 zugewiesen wird. An den Schritt 402 schließt sich ein Schrit 403 an, in dem mit Hilfe der Abfragen

```
Verzögerung =          (nicht ASR)
                und (  (   (Mittelwert vij''' < vRef')
                           und  (Mittelwert vijp < P_aRadmVerz)
                     Oder (axModell < P_axVerz)
                     Oder (Anzahl Räder im ABS > 2))
```

ermittelt wird, ob für das Fahrzeug die Fahrsituation Verzögerung vorliegt. Wird im Schritt 403 festgestellt, daß die Fahrsituation Verzögerung vorliegt, so wird anschließend an den Schritt 403 ein Schritt 404 ausgeführt. In diesem Schritt wird der Größe BEW der Wert V zugewiesen. An den Schritt 404 schließt sich ein Schritt 408 an, mit dem die Bereitstellung der Größe BEW beendet wird. Wird dagegen im Schritt 403 festgestellt, daß die Fahrsituation Verzögerung nicht vorliegt, so wird anschließend an den Schritt 403 ein Schritt 405 ausgeführt, in dem durch Auswertung der Abfragen

```
Beschleunigung =       (nicht Verzögerung)
                und (  (   (Mittelwert vij''' > vRef')
                           Und  (Mittelwert vijp > P_aRadmBeschl))
                     oder (  (   (MMot*ueGe > P_MkaHalbBeschl)
                                  Oder (   ASR
                                           Und  (axModell > P_axBeschl)))
                             und  (axModell+axOff > P_axBeschl))
                     oder (   FdrAus
                              und  (MMot*ueGe > P_MkaHalbBeschlFdrAus)))
```

ermittelt wird, ob für das Fahrzeug die Fahrsituation Beschleunigung vorliegt. Wird im Schritt 405 festgestellt, daß die Fahrsituation Beschleunigung vorliegt, so wird anschließend an den Schritt 405 ein Schritt 406 ausgeführt. In diesem Schritt wird der Größe BEW der Wert B zugewiesen. Anschließend an den Schritt 406 wird der Schritt 408 ausgeführt. Wird dagegen im Schritt 405 festgestellt, daß die Fahrsituation Beschleunigung nicht vorliegt, was gleichbedeutend damit ist, daß weder die Fahrsituation Verzögerung noch die Fahrsituation Beschleunigung sondern eine "sonstige Fahrsituation" vorliegt, so wird anschließend an den Schritt 405 ein Schritt 407 ausgeführt, in dem der Größe BEW der Wert S zugewiesen wird. Nach dem Schritt 407 wird der Schritt 408 ausgeführt.

Die in den Schritten 403 und 405 stattfindende Ermittlung der Fahrsituation wird mit einer diskreten Logik durchgeführt. Die dabei verwendeten Größen P_aRadmVerz, P_axVerz, P_aRadmBeschl, P_MKaHalbBeschl, P_ax-Beschl, P_axBeschl, P_MKaHalbBeschlFdrAus sind zu applizierende Parameter. Im wesentlichen werden in den Schritten 403 und 405 die Radgeschwindigkeiten, die zeitlichen Ableitungen der Radgeschwindigkeiten, eine Längsbeschleunigungsgröße und eine Größe ASR, die anzeigt ob gemäß einer Antriebsschlupfregelung Eingriffe durchgeführt werden, ausgewertet. Denkbar wäre auch die Bestimmung der Fahrsituation mit Hilfe der Fuzzy-Methode.

Im folgenden wird die Figur 5 beschrieben, die aus den Teilfiguren 5a bis 5h besteht. In diesen Teilfiguren sind verschiedene bei der Radstabilitätsbetrachtung eingesetzte Zugehörigkeitsfunktionen (Fuzzy-Sets) dargestellt. Im wesentlichen kommen drei verschiedene Kategorien von Zugehörigkeitsfunktionen zum Einsatz. Die beiden fest parameterisierte Fuzzy-Sets "klein" und "groß" stellen eine erste Kategorie von Fuzzy-Sets dar. Bei diesen beiden Fuzzy-Sets sind die Werte Kx1 und Kx2 und somit auch der Übergang zwischen den Ordiantenwerten 0 und 1 fest vorgegeben. Zu einer zweiten Kategorie von Fuzzy-Sets können die Fuzzy-Sets "kleiner als", "größer als" und "nahe bei" zusammengefaßt werden. Bei diesen Fuyy-Sets handelt es sich um durch zeitlich veränderliche Zustandsgrößen beeinflußte parameterisierte Fuzzy-Sets. Dieser Sachverhalt soll für das Fuzzy-Set "kleiner als" erläutert werden. Wird beispielsweise überprüft, ob die "Radgeschwindigkeitsgröße vij kleiner als die Geschwindigkeitsgröße vref" ist, so stellt in diesem Fall die Zustandsgröße vref den Bezug für das Fuzzy-Set dar, d.h. der Wert der Geschwindigkeitsgröße vref legt den Wert Bezug auf der Abszisse fest. Die Lage der beiden Knickpunkte ergibt sich dann durch die fest vorgegebenen Abstandswerte Kx1 und Kx2. Für die beiden anderen Fuzzy-Sets ist eine entsprechende Vorgehensweise anzuwenden. Eine dritte Kategorie von Fuzzy-Sets stellen die Fuzzy-Sets "am kleinsten", "am größten" und "am nächsten bei" dar. Bei diesen Fuzzy-Sets handelt es sich um adaptive Fuzzy-Sets, welche ausschließlich durch die relative Lage der einzelnen radindividuellen Zustandsgrößen parameterisiert sind und somit eine dynamische Charakteristik aufweisen. Aufgrund der linguistischen Werte sind in diesen drei Fällen für die Ermittlung der Zugehörigkeitsfunktion jeweils sämtliche Räder des Fahrzeuges zu berücksichtigen. Am Beispiel des Fuzzy-Sets "am kleinsten" soll die Generierung des Fuzzy-Sets dargestellt werden. Wird beispielsweise überprüft, ob die Radgeschwindigkeitsgröße vij am kleinsten ist, so werden zunächst die beiden Größen MAX(x) und MIN(x) ermittelt. MAX(x) stellt den maximalen Wert und MIN(x) den minimalen Wert aller Radgeschwindigkeitsgrößen dar. Ausgehend von diesen beiden Werten wird die gewichtete Differenz Kx1 * (MAX(x) - MIN(x)) gebildet. Diese Vorgehensweise stellt eine Normierung dar, denn das Fuzzy-Set weist lediglich den Abszissenbereich auf, der durch die zu bewertende Eingangsgröße vorgegeben wird. Als Eingangsgröße für dieses Fuzzy-Set sind dann relative Eingangsgrößen zu verwenden.

Für die in der Anmeldung aufgeführten Gleichungen bzw. Beziehungen soll folgende Vereinbarung gelten: Die Gleichungen bzw. Beziehungen geben zwar jeweils eine konkrete Rechenvorschrift an, gemäß der eine Größe aus verschiedenen Eingangsgrößen ermittelt wird. Dennoch soll in der Anmeldung für jede der Gleichungen bzw. Beziehungen auch die allgemeine Abhängigkeit, d.h. die von der konkreten Rechenvorschrift losgelöste Abhängigkeit der zu ermittelnden Größe von den Eingangsgrößen enthalten sein.

Abschließend sei bemerkt, daß die in der Beschreibung gewählte Form der Ausführungsbeispiele sowie die in den Figuren gewählte Darstellung keine einschränkende Wirkung auf die erfindungswesentliche Idee haben soll.

## Patentansprüche

1. Verfahren zur Ermittlung einer Geschwindigkeitsgröße (vref), die die Geschwindigkeit eines Fahrzeuges repräsentiert,

   bei dem Radgeschwindigkeitsgrößen (vij) ermittelt werden, die jeweils die Geschwindigkeit eines Rades beschreiben,

   bei dem Gewichtungsgrößen (FRadij) für die einzelnen Radgeschwindigkeitsgrößen ermittelt werden,

   bei dem in Abhängigkeit der mit den Gewichtungsgrößen gewichteten Radgeschwindigkeitsgrößen durch Mittelwertbildung eine Stützgröße (vstütz) ermittelt wird,

   bei dem die Geschwindigkeitsgröße in Abhängigkeit der Stützgröße ermittelt wird,

   wobei die Geschwindigkeitsgröße aus einem ersten Anteil, der in Abhängigkeit einer die Beschleunigung des Fahrzeuges beschreibenden Größe ermittelt wird, und einem zweiten Anteil, der in Abhängigkeit der Stützgröße gebildet wird, besteht, wobei die die Beschleunigung des Fahrzeuges beschreibende Größe aus einer mit Hilfe eines Modells ermittelten Längsbeschleunigung und einem in Abhängigkeit der Stützgröße ermittelten Fehleranteil besteht.

2. Verfahren nach Anspruch 1, **dadurch gekennzeichnet,**

   **daß** die Gewichtungsgrößen in Abhängigkeit eines vorgegebenen Satzes von Regeln ermittelt werden, wobei der vorgegebene Satz von Regeln in Abhängigkeit einer Fahrzeugbewegungsgröße (BEW), die zumindest die Fahrzeugbewegung in Längsrichtung charakterisiert, aus mehreren vorgegebenen Sätzen von Regeln ausgewählt wird, insbesondere wird die Fahrzeugbewegungsgröße wenigstens in Abhängigkeit der Radgeschwindigkeitsgrößen und/oder der zeitlichen Ableitungen (vijp) der Radgeschwindigkeitsgrößen und/oder in Abhängigkeit einer die Längsbeschleunigung des Fahrzeuges beschreibenden Größe (axModell) und/oder einer Größe (ASR), die im Rahmen einer Antriebsschlupfregelung durchgeführte Regelungseingriffe anzeigt, ermittelt.

3. Verfahren nach Anspruch 2, **dadurch gekennzeichnet,**

   **daß** mit Hilfe der Fahrzeugbewegungsgröße folgende Arten von Fahrzeugbewegungen unterschieden werden: eine verzögerte Fahrzeugbewegung, für die ein erster Satz von Regeln ausgewählt wird, und/oder eine beschleunigte Fahrzeugbewegung, für die ein zweiter Satz von Regeln ausgewählt wird, und/oder eine weder verzögerte noch beschleunigte Fahrzeugbewegung, für die ein dritter Satz von Regeln ausgewählt wird

4. Verfahren nach Anspruch 1, **dadurch gekennzeichnet,**

   **daß** die Gewichtungsgrößen mit Hilfe einer unscharfen Logik, insbesondere einer Fuzzy-Logik, ermittelt werden, wobei die Gewichtungsgrößen Wahrscheinlichkeiten repräsentieren, die angeben, in welchem Maße das jeweilige Rad für die Ermittlung der Geschwindigkeitsgröße geeignet ist.

5. Verfahren nach Anspruch 4, **dadurch gekennzeichnet,**
**daß** der unscharfen Logik mehrere Zugehörigkeitsfunktionen zugrunde liegen mit denen Regeln zur Bewertung verschiedener Eingangsgrößen gebildet werden, wobei ein Teil dieser Zugehörigkeitsfunktionen einen fest vorgegebenen Verlauf und ein Teil der Zugehörigkeitsfunktionen einen variablen Verlauf aufweist,
insbesondere werden Zugehörigkeitsfunktionen für die Kategorie "klein" und/oder die Kategorie "groß" und/oder die Kategorie "kleiner als" und/oder die Kategorie "größer als" und/oder die Kategorie "nahe bei" und/oder die Kategorie "am kleinsten" und/oder die Kategorie "am größten" und/oder die Kategorie "am nächsten bei" verwendet.

6. Verfahren nach Anspruch 5, **dadurch gekennzeichnet,**
**daß** sich die Zugehörigkeitsfunktionen, die einen variablen Verlauf aufweisen, an die jeweilige Eingangsgröße und/oder an eine jeweilige Bezugsgröße, die der Regel als Vergleichswert zur Bewertung der jeweiligen Eingangsgröße zugrunde liegt, adaptieren.

7. Verfahren nach Anspruch 1, **dadurch gekennzeichnet,**
**daß** die Gewichtungsgrößen wenigstens in Abhängigkeit der Radgeschwindigkeitsgrößen und/oder erster Radgrößen (vijp), die die erste zeitliche Ableitung der jeweiligen Radgeschwindigkeitsgröße repräsentieren, und/oder zweiter Radgrößen (vijpp), die die zweite zeitliche Ableitung der jeweiligen Radgeschwindigkeitsgröße repräsentieren, und/oder Radkraftgrößen (Fbij), die die jeweils zwischen Reifen und Fahrbahn vorherrschende Bremskraft beschreiben, ermittelt werden.

8. Verfahren nach Anspruch 1, **dadurch gekennzeichnet,**
**daß** aus den Radgeschwindigkeitsgrößen vor Ermittlung der Gewichtungsgrößen schlupfkorrigierte Radgeschwindigkeitsgrößen (vij') ermittelt werden, bei denen der am jeweiligen Rad vorliegende Schlupf (lambdaij) berücksichtigt wird, und/oder transformierte Radgeschwindigkeitsgrößen (vij'') ermittelt werden, bei denen die Fahrzeugbewegung, insbesondere die durch die Gierrate (omega) und/oder den Lenkwinkel (delta) beschriebene Fahrzeugbewegung, berücksichtigt wird, und/oder extrapolierte Radgeschwindigkeitsgrößen (vij''') ermittelt werden, bei denen die Beschleunigung des Fahrzeuges berücksichtigt wird, insbesondere werden zunächst die schlupfkorrigierten aus diesen dann die transformierten und aus diesen dann die extrapolierten Radgeschwindigkeitsgrößen ermittelt.

9. Verfahren nach Anspruch 1, **dadurch gekennzeichnet,**
**daß** bei der Ermittlung der Gewichtungsgrößen für die einzelnen Räder vorliegende Anpassungsphasen berücksichtigt werden, insbesondere werden Zeitgrößen (tAnpassungij) ermittelt, die die Dauer der Anpassungsphasen repräsentieren und die zur Ermittlung der Gewichtungsgrößen ausgewertet werden.

10. Verfahren nach Anspruch 1, **dadurch gekennzeichnet,**
**daß** für die einzelnen Räder jeweils eine Radgröße (vijpp) ermittelt wird, die die zweite zeitliche Ableitung der zugehörigen Radgeschwindigkeit repräsentiert, und
**daß** die Gewichtungsgröße aus wenigstens einer von drei Einzelgewichtungsgrößen aufgebaut ist: einer Stabilitätsgröße (FRStij), die zumindest in Abhängigkeit der Radgröße ermittelt wird und die ein Maß für die Stabilität des jeweiligen Rades darstellt, und/oder einer Situationsgröße (FRSiij), in die zumindest die Lage der jeweiligen Radgeschwindigkeitsgröße zur Geschwindigkeitsgröße und/oder in die eine Aussage, wieviele der Fahrzeugräder eine vorgegebene Bedingung erfüllen, eingeht und/oder einer Gütegröße (FRZij), die ein Maß für die Güte der in den zurückliegenden Zeitschritten ermittelten Gewichtungsgrößen darstellt.

11. Verfahren nach Anspruch 1, **dadurch gekennzeichnet,**
**daß** die Gewichtungsgrößen vor ihrer weiteren Verarbeitung so bewertet werden, daß kleine Werte der Gewichtungsgrößen ausgeblendet oder gedämpft werden.

12. Verfahren nach Anspruch 1, **dadurch gekennzeichnet,**
**daß** in Abhängigkeit der Gewichtungsgrößen eine Bewertungsgröße (Fstütz) ermittelt wird, die ein Maß dafür ist, wie gut die Stützgröße zur Ermittlung der Geschwindigkeitsgröße geeignet ist, und
**daß** in Abhängigkeit der Bewertungsgröße die Stärke der durchzuführenden Stützung bestimmt wird, insbesondere wird in Abhängigkeit der Bewertungsgröße ein Faktor ermittelt, mit dem der auf die Stützgröße zurückgehende Anteil der Geschwindigkeitsgröße bewertet wird.

13. Verfahren nach Anspruch 12, **dadurch gekennzeichnet,**

**daß** in Abhängigkeit der Bewertungsgröße eine Größe (UnsicherheitsTerm) ermittelt wird, die die Güte der Geschwindigkeitsgröße beschreibt, und die zur Ermittlung der Gewichtungsgrößen ausgewertet wird.

14. Verfahren nach Anspruch 3, **dadurch gekennzeichnet, daß** als erster Satz Regeln

```
FRadij =      (FRadij aus reiner Stabilitätsbetrachtung (FRStij))
         oder (Fradij aus Situationsbetrachtung (FRSiij))
         oder (FRadij aus zeitlichem Unsicherheitsterm (FRZij))

FRStij =      (Betrag vijpp klein)
         und  (     (Betrag vijpp am Kleinsten)
              Oder (Abstand vijppmin zu vijppmax klein))
         und  (Betrag vijp klein)
         und  (     (vijp nahe bei axModell+axOff       (nicht bei FMotr))
              oder (Betrag axOff groß (nicht bei FMotr)))
         und  (     (     (vij''' nahe bei vRef')
                   und  (     (vij''' am Nächsten bei vRef')
                         Oder (Abstand vijmin zu vijmax klein)))
              Oder (     (vij''' kleiner als vRef'      (vij''' > 2*vijMin))
                   und  (Fbij klein               (vij''' > 2*vijMin)))))

FRSiij =      (vij''' nahe bei vRef')
         und  (vij''' kleiner als vRef')
         und  (Anzahl Räder mit [vij''' kleiner als vRef'] groß)

FRZij =       (UnsicherheitsTerm groß)
         und  (     (     (vij''' kleiner als vRef')
                   und  (Fbij klein))
              oder (     (vij''' nahe bei vRef')
                   und  (Betrag vijp klein)))
```

verwendet wird, und/oder daß als zweiter Satz Regeln

```
FRadij =      (     (FRadij aus reiner Stabilitätsbetrachtung (FRStij))
              und  (FRadij aus Situationsbetrachtung (FRSiij)))
         oder (FRadij aus Unterbremsbetrachtung (FRUbFij))
         oder (FRadij aus zeitlichem Unsicherheitsterm (FRZij))

FRStij =      (Betrag vijpp klein)
         und  (     (Betrag vijpp am Kleinsten)
              Oder (Abstand vijppmin zu vijppmax klein))
         und  (Betrag vijp klein)
         und  (vijp nahe bei axModell+axOff      (nicht bei [FMotr und !ABS]))
         und  (     (vij''' am Größten)
              oder (Abstand vijmin zu vijmax klein))

FRSiij =      (     (vij''' kleiner vRef')
              und  (vijp klein)
              und  (     (vij''' am Größten)
                   oder (Abstand vijmin zu vijmax klein))
              und  (Betrag vijpp klein               (vij''' > 2*vijMin))
              und  (Anzahl Räder mit [Betrag vijpp sehr klein] groß
                                                    (vij''' > 2*vjMin)))
         oder (     (vij''' größer als vRef')
              und  (Fbij groß)
              und  (vijp groß)
```

```
                        und (    (vij''' nahe bei vRef')
                             oder (Abstand vijmin zu vijmax klein)))
                   oder (    (tAnpassungij groß                        (Rad in Anpassung))
                        und  (vijp klein)
                        und  (    (vij''' am Größten)
                             oder (Abstand vijmin zu vijmax klein)))
                   oder (    (vij''' nahe bei vRef')
                        und  (vijp groß)
                        und  (Anzahl ABS geregelter Räder klein))

         FRUbFij =         (Betrag vijp klein)
                   und (Abstand vijmin zu vijmax klein)
                   und (Abstand vijpmin zu vijpmax klein)
                   und (Abstand vijppmin zu vijppmax klein)
                   und (vij''' kleiner als vRef'                       (vij''' > 2*vijMin))

         FRZij =           (UnsicherheitsTerm groß)
                   und (vij''' kleiner als vRef')
                   und (    (vij''' am Größten)
                        oder (Abstand vijmax zu vijmin klein)
```

verwendet wird und/oder daß als dritter Satz Regeln

```
         Fradij =      (FRadij aus reiner Stabilitätsbetrachtung (FRStij))
                  oder (Fradij aus Situationsbetrachtung (FRSiij, nur bei FMotr))
                  oder (Fradij aus zeitlichem Unsicherheitsterm (FRZij)

         FRStij =      (Betrag vijpp klein)
                  und (    (Betrag vijpp am Kleinsten)
                       oder (Abstand vijppmin zu vijppmax klein))
                  und (Betrag vijp klein)
                  und (vijp nahe bei axModell+axOff (nicht bei FMotr))
                  und (    (    (vij''' nahe bei vRef')
                           und (    (vij''' am Nächsten bei vRef')
                                oder (Abstand vijmin zu vijmax klein)))
                       oder (    (vij''' kleiner als vRef')
                            und (Abstand vijmin zu vijmax klein)))

         FRSiij =      (vij''' nahe bei vRef')
                  und (vij''' kleiner als vRef')
                  und (Anzahl Räder mit [vij''' kleiner als vRef'] groß)

         FRZij = Null
```

verwendet wird.

15. Verfahren nach Anspruch 2, **dadurch gekennzeichnet, daß** zur Ermittlung, ob die Fahrsituation Verzögerung vorliegt, folgende Abfragen ausgewertet werden:

```
         (nicht ASR)
    und (   (   (Mittelwert vij''' < vRef')
            und (Mittelwert vijp < P_aRadmVerz)
         Oder   (axModell < P_axVerz)
         Oder   (Anzahl Räder im ABS > 2)),
```

und/oder daß zur Ermittlung, ob die Fahrsituation Beschleunigung vorliegt, folgende Abfragen ausgewertet werden:

```
         (nicht Verzögerung)
```

```
und (   (   (Mittelwert vij''' > vRef')
        Und (Mittelwert vijp > P_aRadmBeschl))
    oder   (   (   (MMot*ueGe > P_MkaHalbBeschl)
           Oder   (   ASR
               Und (axModell > P_axBeschl)))
        und (axModell+axOff > P_axBeschl))
    oder   (   FdrAus
        und (MMot*ueGe > P_MkaHalbBeschlFdrAus))) .
```

16. Vorrichtung zur Ermittlung einer Geschwindigkeitsgröße (vref), die die Geschwindigkeit eines Fahrzeuges repräsentiert,
die Mittel (103ij) enthält, mit denen Radgeschwindigkeitsgrößen (vij), die jeweils die Geschwindigkeit eines Rades beschreiben, ermittelt werden
die Mittel (206) enthält, mit denen Gewichtungsgrößen (FRadij) für die einzelnen Radgeschwindigkeitsgrößen ermittelt werden, und mit denen in Abhängigkeit der mit den Gewichtungsgrößen gewichteten Radgeschwindigkeitsgrößen durch Mittelwertbildung eine Stützgröße (vstütz) ermittelt wird, und die Mittel (209) enthält, mit denen die Geschwindigkeitsgröße in Abhängigkeit der Stützgröße ermittelt wird,
wobei die Geschwindigkeitsgröße aus einem ersten Anteil, der in Abhängigkeit einer die Beschleunigung des Fahrzeuges beschreibenden Größe ermittelt wird, und einem zweiten Anteil, der in Abhängigkeit der Stützgröße gebildet wird, besteht, wobei die die Beschleunigung des Fahrzeuges beschreibende Größe aus einer mit Hilfe eines Modells ermittelten Längsbeschleunigung und einem in Abhängigkeit der Stützgröße ermittelten Fehleranteil besteht.

## Claims

1. Method for determining a speed value (vref) which represents the speed of a vehicle,
in which the wheel speed values (vij) are determined which each describe the speed of a wheel,
in which weighting variables (FRadij) are determined for the individual wheel speed values,
in which a support variable (vsup) is determined by forming mean values as a function of the wheel speed values weighted with the weighting variables,
in which the speed value is determined as a function of the support variable,
wherein the speed value is composed of a first component, which is determined as a function of a variable which describes the acceleration of the vehicle, and a second component, which is formed as a function of the support variable,
wherein the variable which describes the acceleration of the vehicle is composed of a longitudinal acceleration which is determined using a model, and a fault component which is determined as a function of the support variable.

2. Method according to Claim 1, **characterized in that** the weighting variables are determined as a function of a predefined set of rules, wherein the predefined set of rules is selected from a plurality of predefined sets of rules as a function of a vehicle movement variable (BEW), which characterizes at least the vehicle movement in the longitudinal direction,
in particular the vehicle movement variable is determined at least as a function of the wheel speed values and/or the derivatives (vijp) of the wheel speed values over time and/or as a function of a variable (axModell) which describes the longitudinal acceleration of the vehicle and/or a variable (TCS) which indicates control interventions carried out within the scope of a traction control process.

3. Method according to Claim 2, **characterized in that** the following types of vehicle movements are differentiated using the vehicle movement variable: a decelerated vehicle movement, for which a first set of rules is selected, and/or an accelerated vehicle movement, for which a second set of rules is selected, and/or a vehicle movement which is neither decelerated nor accelerated and for which a third set of rules is selected.

4. Method according to Claim 1, **characterized in that** the weighting variables are determined using, in particular, a fuzzy logic, wherein the weighting variables represent probabilities which indicate the degree to which the respective wheel is suitable for determining the speed value.

5. Method according to Claim 4, **characterized in that** a plurality of membership functions form the basis of the fuzzy logic and are used to form rules for evaluating various input variables, wherein some of these membership functions have a permanently predefined profile, and some of the membership functions have a variable profile,
in particular membership functions are used for the category "small" and/or the category "large" and/or the category "smaller than" and/or the category "larger than" and/or the category "close to" and/or the category "the smallest" and/or the category "the largest" and/or the category "closest to".

6. Method according to Claim 5, **characterized in that** the membership functions which have a variable profile are adapted to the respective input variable and/or to a respective reference variable on which the rule is based as a comparison value for evaluating the respective input variable.

7. Method according to Claim 1, **characterized in that** the weighting variables are determined at least as a function of the wheel speed values and/or first wheel variables (vijp) which represent the first derivative of the respective wheel speed value over time, and/or second wheel variables (vijpp) which represent the second derivative of the respective wheel speed value over time, and/or wheel force variables (Fbij) which describe the braking force respectively prevailing between the tyre and the carriageway.

8. Method according to Claim 1, **characterized in that** the wheel speed values are used to determine, before the determination of the weighting variables, slip-corrected wheel speed values (vij') in which the slip (lambdaij) present at the respective wheel is taken into account and/or transformed wheel speed values (vij") are determined in which the vehicle movement, in particular the vehicle movement described by the yaw rate (omega) and/or the steering angle (delta) is taken into account, and/or extrapolated wheel speed values (vij''') are determined in which the acceleration of the vehicle is taken into account, in particular at first the slip-corrected wheel speed values are determined and then the transformed wheel speed values are determined therefrom, and the extrapolated wheel speed values are then determined from the transformed wheel speed values.

9. Method according to Claim 1, **characterized in that**, during the determination of the weighting variables for the individual wheels, present adaptation phases are taken into account, in particular time variables (tAdaptationij), which represent the duration of the adaptation phases and are evaluated in order to determine the weighting variables, are determined.

10. Method according to Claim 1, **characterized in that** a wheel variable (vijpp), which represents the second derivative of the associated wheel speed over time, is determined for each of the individual wheels, and **in that** the weighting variable is made up of at least one of three individual weighting variables: a stability variable (FRStij) which is determined at least as a function of the wheel variable and which constitutes a measure of the stability of the respective wheel, and/or a situation variable (FRSiij), which includes at least the position of the respective wheel speed value in relation to the speed value and/or a statement as to how many of the vehicle wheels meet a predefined condition, and/or a quality variable (FRZij) which constitutes a measure of the quality of the weighting variables which are determined in the preceding time steps.

11. Method according to Claim 1, **characterized in that** the weighting variables are evaluated before their further processing in such a way that small values of the weighting variables are gated out or attenuated.

12. Method according to Claim 1, **characterized in that** an evaluation variable (Fsup) is determined as a function of the weighting variables, which evaluation variable (Fsup) is a measure of how suitable the support variable is for determining the speed value, and
**in that** the degree of support which is to be carried out is determined as a function of the evaluation variable, in particular a factor with which the proportion of the speed value which is due to the support variable is evaluated, is determined as a function of the evaluation variable.

13. Method according to Claim 12, **characterized in that** a variable (uncertainty term) is determined which describes the quality of the speed value and which is evaluated in order to determine the weighting variables, as a function of the evaluation variable.

14. Method according to Claim 3, **characterized in that** the following are used as a first set of rules:

```
FRadij =    (FRadij from consideration of stability only (FRStij))
       or   (FRadij from consideration of situation (FRSiij))
       or   (FRadij from chronological uncertainty term (FRZij))

FRStij =    (absolute value vijpp small)
       and ( (absolute value vijpp at its smallest)
             or (distance between vijppmin and vijppmax small))
       and (absolute value vijp small)
       and ( (vijp close to axModell+axOff              (not in case of FMotr))
             or (absolute value axOff large (not in case of FMotr)))
       and ( ( (vij''' close to vRef')
               and ( (vij''' closest to vRef')
                     or (distance between vijmin and vijmax small)))
             or ( (vij''' smaller than vRef'          (vij''' > 2*vijMin))
                  and (Fbij small             (vij''' > 2*vijMin)))))

FRSiij =    (vij''' close to vRef')
       and  (vij''' smaller than vRef')
       and  (number of wheels where [vij''' smaller than vRef'] large)

FRZij =     (uncertainty term large)
       and ( ( (vij''' smaller than vRef')
               and (Fbij small))
             or ( (vij''' close to vRef')
                  and (absolute value vijp small)))
```

and/or **in that** the following are used as a second set of rules:

```
FRadij =    (  (FRadij from consideration of stability only (FRStij))
            and (FRadij from consideration of situation (FRSiij)))
       or   (FRadij from consideration of underbraking (FRUbFij))
       or   (FRadij from chronological uncertainty term (FRZij))

FRStij =    (absolute value vijpp small)
       and ( (absolute value vijpp at its smallest)
             or (distance between vijppmin and vijppmax small))
       and (absolute value vijp small)
       and (vijp close to axModell+axOff (not in case of [FMotr and !ABS]))
       and ( (vij''' at its largest)
             or (distance between vijmin and vijmax small))

FRSiij =    ( (vij''' smaller than vRef')
            and (vijp small)
            and ( (vij''' at its largest)
                  or (distance between vijmin and vijmax small))
```

```
            and (absolute value vijpp small             (vij''' > 2*vijMin))
            and    (number of wheels where [absolute value vijpp very small] large
                                                        (vij''' > 2* vjMin)))
      or   (   (vij''' larger than vRef')
            and (Fbij large)
            and (vijp large)
            and (  (vij''' close to vRef')
               or (distance between vijmin and vijmax small)))
      or   (   (tAdaptationij large                (wheel under adaptation))
            and (vijp small)
            and (  (vij''' at its largest)
               or (distance between vijmin and vijmax small)))
      or   (   (vij''' close to vRef')
            and (vijp large)
            and (number of ABS-controlled wheels small))

   FRUbFij =   (absolute value vijp small)
         and (distance between vijmin and vijmax small)
         and (distance between vijpmin and vijpmax small)
         and (distance between vijppmin and vijppmax small)
         and (vij''' smaller than vRef'          (vij''' > 2*vijMin))

   FRZij =     (uncertainty term large)
         and (vij''' smaller than vRef')
         and (   (vij''' at its largest)
            or   (distance between vijmax and vijmin small)
```

and/or **in that** the following are used as the third set of rules:

```
   Fradij =    (FRadij from consideration of stability only (FRStij))
         or    (Fradij from consideration of situation (FRSiij, only in case of FMotr))
         or    (Fradij from chronological uncertainty term (FRZij)

   FRStij =    (absolute value vijpp small)
         and (  (absolute value vijpp at its smallest)
            or (distance between vijppmin and vijppmax small))
         and (absolute value vijp small)
         and (vijp close to axModell+axOff (not in case of FMotr))
         and (  (  (vij''' close to vRef')
               and (  (vij''' at its closest to vRef')
                     or  (distance between vijmin to vijmax small)))
               or  (  (vij''' smaller than vRef')
                  and (distance between vijmin and vijmax small)))

   FRSiij =    (vij''' close to vRef')
         and (vij''' smaller than vRef')
         and (number of wheels where [vij''' smaller than vRef'] large)

   FRZij = zero.
```

**15.** Method according to Claim 2, **characterized in that**, in order to determine whether the driving situation of deceleration is present, the following interrogations are evaluated:

```
      (not ASR)
      and (   (   (mean value vij''' < vRef')
            and (mean value vijp < P_aRadmVerz)
         or      (axModell < P_axVerz)
         or      (number of wheels in ABS > 2)),
```

and/or **in that**, in order to determine whether the driving situation of acceleration is present, the following interro-

gations are evaluated:

```
        (not deceleration)
and (   (    (mean value vij''' > vRef')
        and (mean value vijp > P_aRadmBeschl))
     or     (    (MMot*ueGe > P_MkaHalbBeschl)
            or      (   ASR
                and (axModell > P_axBeschl)))
        and (axModell+axOff > P_axBeschl))
     or     (   FdrAus
        and (MMot*ueGe > P_MkaHalbBeschlFdrAus))).
```

**16.** Device for determining a speed value (vref) which represents the speed of a vehicle,
which contains means (103ij) with which wheel speed values (vij) which each describe the speed of a wheel are determined,
which contains means (206) with which weighting variables (FRadij) are determined for the individual wheel speed values and with which a support variable (vsup) is determined by forming mean values as a function of the wheel speed values weighted with the weighting variables, and which contains means (209) with which the speed value is determined as a function of the support variable,
wherein the speed value is composed of a first component, which is determined as a function of a variable which describes the acceleration of the vehicle, and a second component, which is formed as a function of the support variable,
wherein the variable which describes the acceleration of the vehicle is composed of a longitudinal acceleration which is determined using a model and a fault component which is determined as a function of the support variable.

## Revendications

**1.** Procédé de détermination d'une grandeur de vitesse (vref) qui représente la vitesse d'un véhicule,
dans lequel des grandeurs (vij) de vitesse de roue sont déterminées et décrivent chacune la vitesse d'une roue,
des grandeurs de pondération (FRadij) des différentes grandeurs de vitesse de roue étant déterminées,
dans lequel en fonction des grandeurs de vitesse de roue pondérées par les grandeurs de pondération, une grandeur d'assistance (vstütz) est déterminée par formation d'une moyenne, la grandeur de vitesse étant déterminée en fonction de la grandeur d'assistance,
la grandeur de vitesse étant constituée d'une première partie déterminée en fonction d'une grandeur qui décrit l'accélération du véhicule et d'une deuxième partie formée en fonction de la grandeur d'assistance,
la grandeur décrivant l'accélération du véhicule étant constituée d'une accélération longitudinale déterminée à l'aide d'un modèle et d'une partie d'erreur déterminée en fonction de la grandeur d'assistance.

**2.** Procédé selon la revendication 1, **caractérisé en ce que** les grandeurs de pondération sont déterminées en fonction d'un ensemble prédéterminé de règles, l'ensemble prédéterminé de règles étant sélectionné parmi plusieurs ensembles prédéterminés de règles en fonction d'une grandeur (BEW) de déplacement du véhicule qui caractérise le déplacement du véhicule au moins dans la direction longitudinale,
la grandeur de déplacement du véhicule étant déterminée au moins en fonction des grandeurs de vitesse de roue et/ou des dérivées temporelles (vijp) des grandeurs de vitesse de roue et/ou en fonction d'une grandeur (axModell) qui décrit l'accélération longitudinale du véhicule et/ou d'une grandeur (ASR) qui indique les interventions de régulation exécutées dans le cadre d'une régulation du patinage d'entraînement.

**3.** Procédé selon la revendication 2, **caractérisé en ce que** les différents types de déplacement du véhicule sont distingués à l'aide des grandeurs de déplacement du véhicule : un déplacement ralenti du véhicule pour lequel un premier jeu de règles est sélectionné, un déplacement accéléré du véhicule pour lequel un deuxième ensemble de règles est sélectionné et/ou un déplacement non ralenti et non accéléré du véhicule pour lequel un troisième ensemble de règles est sélectionné.

4. Procédé selon la revendication 1, **caractérisé en ce que** les grandeurs de pondération sont déterminées à l'aide d'une logique floue et en particulier d'une logique dite "fuzzy", les grandeurs de pondération représentant des probabilités qui indiquent dans quelle mesure la roue concernée convient pour déterminer la grandeur de vitesse.

5. Procédé selon la revendication 4, **caractérisé en ce que** plusieurs fonctions d'appartenance avec lesquelles des règles d'évaluation de différentes grandeurs d'entrée sont formées sont à la base de la logique floue, une partie de ces fonctions d'appartenance présentant une évolution fixement prédéterminée et une partie des fonctions d'appartenance une évolution variable, les fonctions d'appartenance étant utilisées en particulier pour la catégorie "petit", la catégorie "grand", la catégorie "plus petit que", la catégorie "plus grand que", la catégorie "proche de", la catégorie "le plus petit", la catégorie "le plus grand" et/ou la catégorie "le plus près de".

6. Procédé selon la revendication 5, **caractérisé en ce que** les fonctions d'appartenance qui présentent une évolution variable s'adaptent à la grandeur d'entrée concernée et/ou à une grandeur d'entrée concernée qui est à la base de la règle comme valeur de comparaison utilisée pour évaluer la grandeur d'entrée concernée.

7. Procédé selon la revendication 1, **caractérisé en ce que** les grandeurs de pondération sont déterminées au moins en fonction des grandeurs de vitesse de roue, de premières grandeurs de roue (vijp) qui représentent la dérivée première par rapport au temps de la grandeur de vitesse de roue concernée, de deuxièmes grandeurs de roue (vijpp) qui représentent la dérivée seconde par rapport au temps de la grandeur de vitesse de roue concernée et/ou de grandeurs de force exercée sur les roues (Fbij), qui décrivent la force de freinage appliquée entre le bandage de roue et la chaussée.

8. Procédé selon la revendication 1, **caractérisé en ce qu'**avant la détermination des grandeurs de pondération, des grandeurs de vitesse de roue (vij') à patinage corrigé sont déterminées pour les grandeurs de vitesse de roue et tiennent compte du patinage (lambdaij) présent sur la roue concernée, des grandeurs transformées de vitesse de roue (vij") pour lesquelles le déplacement du véhicule, en particulier le déplacement du véhicule décrit par la vitesse de lacet (omega) et/ou l'angle de direction (delta) est pris en compte sont déterminées et/ou des grandeurs extrapolées de vitesse de roue (vij''') dans lesquelles l'accélération du véhicule est prise en compte sont déterminées, et en particulier les grandeurs de vitesse de roue à patinage corrigé sont déterminées en premier lieu, à partir de celles-ci les grandeurs transformées de vitesse de roue et à partir de ces dernières les grandeurs extrapolées de vitesse de roue.

9. Procédé selon la revendication 1, **caractérisé en ce que** dans la détermination des grandeurs de pondération, des phases d'adaptation prévues pour les différentes roues sont prises en compte, et en particulier les grandeurs temporelles (tAnpassungij) qui représentent la durée des phases d'adaptation et qui sont évaluées pour déterminer les grandeurs de pondération sont déterminées.

10. Procédé selon la revendication 1, **caractérisé en ce qu'**une grandeur de roue (vijpp) est déterminée pour chacune des différentes roues et représente la dérivée seconde par rapport au temps de la vitesse de roue associée et **en ce que** la grandeur de pondération est constituée d'au moins une parmi trois grandeurs distinctes de pondération : une grandeur de stabilité (FRStij) qui est déterminée au moins en fonction de la grandeur de roue et qui représente une mesure de la stabilité de la roue concernée, et/ou une grandeur de situation (FRSiij) dans laquelle intervient au moins la position de la grandeur de vitesse de roue concernée par rapport à la grandeur de vitesse et/ou une conclusion sur la mesure suivant laquelle les roues du véhicule satisfont une condition prédéterminée et/ou une grandeur de qualité (FRZij) qui représente une mesure de la qualité des grandeurs de pondération déterminées dans les étapes temporelles précédentes.

11. Procédé selon la revendication 1, **caractérisé en ce que** les grandeurs de pondération sont évaluées avant la poursuite de leur traitement de telle sorte que les petites valeurs des grandeurs de pondération soient exclues ou amorties.

12. Procédé selon la revendication 1, **caractérisé en ce qu'**une grandeur d'évaluation (Fstütz) qui représente une mesure de la qualité avec laquelle la grandeur d'assistance convient pour déterminer la grandeur de vitesse est déterminée en fonction des grandeurs de pondération et **en ce que** l'intensité de l'assistance qui doit être exécutée est déterminée en fonction de la grandeur d'évaluation, et en particulier un facteur par lequel la partie de la grandeur de vitesse qui découle de la grandeur d'assistance est évaluée est déterminé en fonction de la grandeur d'évaluation.

**13.** Procédé selon la revendication 12, **caractérisé en ce qu'**une grandeur (UnsicherheitsTerm) qui décrit la qualité de la grandeur de vitesse est déterminée en fonction de la grandeur d'évaluation et est évaluée pour déterminer les grandeurs de pondération.

**14.** Procédé selon la revendication 3, **caractérisé en ce qu'**il utilise comme premier ensemble de règles :

*FRadij = (FRadij provenant d'une pure constatation de stabilité (FRStij))*
*ou (Fradij provenant d'une constatation de la situation (FRSiij))*
*ou (FRadij provenant du terme d'incertitude temporelle (FRZij))*
*FRStij = (valeur de vijpp petite)*
*et ((valeur de vijpp la plus petite)*
*ou (écart entre vijppmin et vijppmax petit))*
*et (valeur de vijp petite)*
*et ((vijp proche de axModell+axOff (pas pour FMotr))*
*ou (valeur axOff grande (pas pour FMotr)))*
*et (((vij"' proche de vRef')*
*et ((vij"' le plus proche de vRef')*
*ou (distance vijmin par rapport à vijmax petite)))*
*ou ((vij"' plus petit que vRef' (vij"' > 2\*vijMin))*
*et (Fbij petit (vij"' > 2\*vijMin))))*
*FRSiij = (vis"' proche de vRef')*
*et (vij"' plus petit que vRef')*
*et (nombre de roues avec [vij"' plus petit que vRef'] grand)*
*FRZij = (terme d'incertitude grand)*
*et (((vij"' plus petit que vRef')*
*et (Fbij petit))*
*ou ((vit'"' proche de vRef')*
*et (valeur de vijp petite))),*

**en ce qu'**il utilise comme deuxième ensemble de règles :

*FRadij = (FRadij provenant d'une pure constatation de stabilité (FRStij))*
*et (Fradij provenant d'une constatation de la situation (FRSiij))*
*ou (FRadij provenant d'une constatation de sous-freinage (FRUbFij))*
*ou (FRadij provenant du terme d'incertitude temporelle (FRZij))*
*FRStij = (valeur de vijpp petite)*
*et ((valeur de vijpp la plus petite)*
*ou (écart entre vijppmin et vijppmax petit))*
*et (valeur de vijp petite)*
*et ((vijp proche de axModell+axOff (pas pour [FMotr et !ABS]))*
*et ((vij"' le plus grand)*
*ou (distance vijmin par rapport à vijmax petite)))*
*FRSiij = ((vij"' plus petit que vRef')*
*et (vijp petit)*
*et ((vij"' le plus grand)*
*ou (distance entre vijmin et vijmax petite))*
*et (valeur vijpp petite (vij"' > 2\*vijMin))*
*et (nombre de roues avec [valeur vijpp très petite] grand) (vij"' > 2\*vijMin)))*
*ou ((vit"' pl us grand que vRef')*
*et (Fbij grand)*
*et (vijp grand)*
*et ((vit"' proche de vRef')*
*ou (distance entre vijmin et vijmax petite)))*
*ou (tAnpassungij grand (roue en adaptation))*
*et (vijp petit)*
*et (((vij"' le plus grand)*

*ou (distance entre vijmin et vijmax petite)))*
*ou ((vit''' proche de vRef')*
*et (vijp grand)*
*et (nombre de roues régulées par ABS petit))*
*FRUbFij = (valeur de vijp petite)*
*et (distance entre vijmin et vijmax petite)*
*et (distance entre vijpmin et vijpmax petite)*
*et (distance entre vijppmin et vijppmax petite)*
*et (vij''' plus petit que vRef' (vij''' > 2\*vijMin))*
*FRZij = (terme d'incertitude grand)*
*et (vil''' plus petit que vRef')*
*et ((vij''' le plus grand)*
*ou ((distance entre vijmin et vijmax petite)*

et/ou **en ce qu'**il utilise comme troisième ensemble de règles :

*FRadij = (FRadij provenant d'une pure constatation de stabilité (FRStij))*
*ou (Fradij provenant d'une constatation de la situation (FRSiij, <u>uniquement pour FMotr</u>))*
*ou (FRadij provenant du terme d'incertitude temporelle (FRZij))*
*FRStij - (valeur de vijpp petite)*
*et ((valeur de vijpp la plus petite)*
*ou (écart entre vijppmin et vijppmax petit))*
*et (valeur de vijp petite)*
*et ((vijp proche de axModell+axOff (pas pour FMotr))*
*et (((vij''' proche de vRef')*
*et ((vij''' le plus proche de vRef')*
*ou (distance vijmin par rapport à vijmax petite)))*
*ou ((vij''' plus petit que vRef')*
*et (distance vijmin par rapport à vijmax petite)))*
*FRSiij = (vij''' proche de vRef')*
*et (vij''' plus petit que vRef')*
*et (nombre de roues avec [vij''' plus petit que vRef'] grand)*
*FRZij = 0*

**15.** Procédé selon la revendication 2, **caractérisé en ce que** pour déterminer si la situation de roulage correspond à un ralentissement, les questions suivantes sont évaluées :

*(non ASR)*
*et (((valeur moyenne vij''' < vRef')*
*et (valeur moyenne vijp < P_aRadmVerz)*
*ou (axmodell < P_axVerz)*
*ou (nombre de roues en ABS > 2)),*
et/ou **en ce que** pour déterminer si la situation de conduite est une accélération, les questions suivantes sont évaluées :
*(non ralentissement)*
*et (((valeur moyenne vij''' > vRef')*
*et (valeur moyenne vijp > P_aRadmBeschl))*
*ou (((MMot\*ueGe > P_MkaHalbBeschl)*
*ou (ASR*
*et (axmodell > P_asBeschl)))*
*et (axModell+axOff > P_axBeschl))*
*ou (FdrAus*
*et (MMot\*ueGe > P_MkaHalbBeschlFdrAus))).*

**16.** Dispositif de détermination d'une grandeur de vitesse (vref) qui représente la vitesse d'un véhicule, qui contient des moyens (103ij) par lesquels des grandeurs de vitesse de roue (vij) qui décrivent la vitesse de chacune des roues sont déterminées, des moyens (206) par lesquels des grandeurs de pondération (FRadij) sont déterminées pour les différentes grandeurs de vitesse de roue et par lesquels une grandeur d'assistance (vstütz) est déterminée en fonction des grandeurs de vitesse de roue pondérées par les grandeurs de pondération, par formation d'une moyenne, et

des moyens (209) par lesquels la grandeur de vitesse est déterminée en fonction de la grandeur d'assistance, la grandeur de vitesse étant constituée d'une première partie qui est déterminée en fonction d'une grandeur qui décrit l'accélération du véhicule et d'une deuxième partie qui est formée en fonction de la grandeur d'assistance, la grandeur décrivant l'accélération du véhicule étant constituée d'une accélération longitudinale déterminée à l'aide d'un modèle et d'une partie d'erreur déterminée en fonction de la grandeur d'assistance.

Fig. 1

Fig. 2

Fig. 3

```
                    ┌──────────────┐
                    │    Start     │────── 301
                    └──────────────┘
                            │
    ┌───────────────────────┼
    │                       ▼
    │       ┌───────────────────────────────┐
    │       │ Fahrzeugbewegungsgröße BEW    │────── 302
    │       │        bereitstellen          │
    │       └───────────────────────────────┘
    │                       │
    │                       ▼
    │       ┌───────────────────────────────┐
    │       │   Auswahl eines Satzes von    │────── 303
    │       │ Regeln in Abhängigkeit von BEW │
    │       └───────────────────────────────┘
    │                       │
    │                       ▼
    │       ┌───────────────────────────────┐
    │       │     Ermittlung der            │
    │       │   Gewichtungsgrößen FRadij    │
    │       │   für die einzelnen Räder     │────── 304
    │       │   mit Hilfe des ausgewählten  │
    │       │     Satzes von Regeln         │
    │       └───────────────────────────────┘
    │                       │
    │                       ▼
    │       ┌───────────────────────────────┐
    │       │ Ermittlung der Größen f(FRadij) │──── 305
    │       │   für die einzelnen Räder     │
    │       └───────────────────────────────┘
    │                       │
    │                       ▼
    │       ┌───────────────────────────────┐
    │       │ Ermittlung der Stützgröße vStütz │── 306
    │       │   und der Größe Fstütz        │
    │       └───────────────────────────────┘
    │                       │
    │                       ▼
    │       ┌───────────────────────────────┐
    │       │     Ermittlung der Größe      │────── 307
    │       │      UnsicherheitsTerm        │
    │       └───────────────────────────────┘
    │                       │
    │                       ▼
    │       ┌───────────────────────────────┐
    │       │ Ermittlung der Geschwindigkeitsgröße │── 308
    │       │   vref in Abhängigkeit der    │
    │       │ Stützgröße vStütz und der Größe FStütz │
    │       └───────────────────────────────┘
    │                       │
    └───────────────────────┘
```

Fig. 4

```
    ┌─────────────┐
    │    Start    │────401
    └─────────────┘
           │
           ▼
    ┌─────────────┐
    │   BEW=0     │────402
    └─────────────┘
           │
           │        403                    404
           ▼                      ┌─────────────┐
      ╱─────────╲        ja       │   BEW=V     │
     ╱           ╲──────────────▶ │             │────┐
     ╲ Verzögerung?╱              └─────────────┘    │
      ╲─────────╱                                    │
           │                                         │
          nein                          406          │
    405    ▼                      ┌─────────────┐    │
      ╱─────────────╲     ja      │   BEW=B     │    │
     ╱               ╲──────────▶ │             │──┐ │
     ╲ Beschleunigung?╱           └─────────────┘  │ │
      ╲─────────────╱                              │ │
           │                                       │ │
          nein                                     │ │
    407    ▼                                       │ │
    ┌─────────────┐                                │ │
    │   BEW=S     │────                            │ │
    └─────────────┘                                │ │
           │                                       │ │
           │◀──────────────────────────────────────┘ │
           ▼
    ┌─────────────┐
    │    Ende     │────408
    └─────────────┘
```

linguistischer
Wert

1,0

0,0

Kx1    Kx2    Eingangsgröße

„klein"

Fig. 5a

linguistischer
Wert

1,0

0,0

Kx1    Kx2    Eingangsgröße

„groß"

Fig. 5b

linguistischer
Wert

1,0

0,0

Kx1    Kx2    Eingangsgröße

Bezug

„kleiner als"

Fig. 5c

linguistischer
Wert

1,0

„größer als"

Fig. 5d

0,0

Eingangsgröße

Kx1    Kx2

Bezug

linguistischer
Wert

Bezug

1,0

„nahe bei"

Fig. 5e

0,0

Eingangsgröße

Kx2    Kx2

Kx1  Kx1

linguistischer
Wert

1,0

„am kleinsten"

Fig. 5f

Ky1

0,0

Kx1*(MAX(x)-MIN(x))    relative
Eingangs-
MIN(x)                              MAX(x)    größe

linguistischer
Wert

1,0

„am größten"

Ky1

0,0

MIN(x)    Kx1*(MAX(x)-MIN(x))

MAX(x)

relative
Eingangsgröße

## Fig. 5g

linguistischer
Wert

1,0

„am nächsten bei"

Ky1

0,0

Kx1*(MAX(ABS(x-Bezug))
-MIN(ABS(x-Bezug)))

relative
Eingangsgröße

## Fig. 5h

MIN(ABS(x-Bezug))

MAX(ABS(x-Bezug))

f(x)

1,0

Kx2

0,0

0,0    Kx1  Kx2    1,0  x

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19713251 A1

- DE 4428347 C2

**In der Beschreibung aufgeführte Nicht-Patentliteratur**

- *Automobiltechnischen Zeitschrift (ATZ),* 1994, vol. 96, 674-689